# EUROPEAN PATENT APPLICATION

(11) **EP 4 228 305 A1**
(43) Date of publication of application: **16.08.2023**
(21) Application number: 20960274.7
(22) Date of filing: 04.11.2020
(51) Int. Cl.: H04W 12/08, H04L 9/08

(54) **SLICE ISOLATION METHOD, APPARATUS, AND SYSTEM**

(71) Applicant: Huawei Technologies Co., Ltd., Shenzhen, Guangdong 518129 (CN)
(72) Inventor: LEI, Zhongding, Shenzhen, Guangdong 518129 (CN)
(74) Representative: Isarpatent
(86) International application number: PCT/CN2020/126579
(87) International publication number: WO 2022/094812

(57) **Abstract**

Embodiments of this application provide a slice isolation method, an apparatus, and a system, to avoid information leakage between slices and ensure information security between the slices. The method includes: A first network device obtains information about a first slice of user equipment; and the first network device obtains a second key if the information about the first slice does not match information about a second slice that the user equipment requests to access. The second key is for performing security protection on the information about the second slice and/or information that is in a process in which the user equipment accesses the second slice.

## Description

### TECHNICAL FIELD

This application relates to the field of wireless communication technologies, and in particular, to a slice isolation method, an apparatus, and a system.

### BACKGROUND

A global system for mobile communications association (global system for mobile communications association, GSMA) defines a common attribute of a generic network slice template, which is referred to as an attribute of a slice for short. The attribute of the slice is for describing whether the slice can be simultaneously used with another slice. To be specific, whether user equipment can simultaneously use a plurality of slices. The plurality of slices may share some network resources. If the slices are not properly isolated, there is a risk of information leakage from each other.

In an existing 3rd generation partnership project (3rd generation partnership project, 3GPP) standard, user equipment is allowed to successively access different slices in nonsimultaneously. When the user equipment successively accesses different slices, the user equipment may use a same access and mobility management function (access and mobility management function, AMF), or may use different AMFs. Therefore, the user equipment may access a slice 1 at a moment. After using and completing a service on the slice 1, the user equipment exits the slice 1 and a network. Then, the user equipment may access a slice 2, and the user equipment and the network may retain and use a security context corresponding to the slice 1. In this case, the slice 2 may obtain and use the currently stored security context. As a result, related information about the slice 1 is obtained by the slice 2, and there is a risk of leakage of the information about the slice 1.

### SUMMARY

Embodiments of this application provide a slice isolation method, an apparatus, and a system, to avoid information leakage between slices, and ensure security of control signaling and data between the slices.

According to a first aspect, a slice isolation method is provided, and includes: A first network device obtains information about a first slice of user equipment; and the first network device obtains a second key if the information about the first slice does not match information about a second slice that the user equipment requests to access. The second key is for performing security protection on the information about the second slice and/or information that is in a process in which the user equipment accesses the second slice.

The second key is a key used by the user equipment and a network when the user equipment accesses the second slice. The second key is for performing security protection on the information about the second slice and/or the information that is in a process in which the user equipment accesses the second slice. In a possible understanding, the second key is a key of the first network device (for example, an AMF). For example, the second key is a key, of the first network device, that is in a process in which the user equipment accesses the second slice. In another possible understanding, the second key is a key for the second slice, or the second key is a key of the second slice.

It may be understood that the "information" involved in this embodiment of this application includes but is not limited to slice-related control signaling and user data.

According to the foregoing method, the first network device may re-obtain the second key when the currently stored information about the first slice does not match the information about the second slice that is requested to be accessed, to ensure that the information about the second slice is protected by using the second key, and can be correctly decrypted by only using the second key. This prevents the information about the second slice from being obtained by using another key, so that information security between slices is ensured.

In a possible design, the information about the first slice includes an attribute of the first slice, and the information about the second slice includes an attribute of a second slice. That the first network device obtains a second key if the information about the first slice does not match information about a second slice that the user equipment requests to access includes:

The first network device obtains the second key if the attribute of the first slice does not match the attribute of the second slice.

An attribute of a slice may be for describing whether the slice can be simultaneously used with another slice. Therefore, when the attributes of the slices do not match, it is determined that the first slice and the second slice cannot be simultaneously used by the user equipment, to distinguish a key that is in a process in which the user equipment accesses the first slice from a key that is in a process in which the user equipment accesses the second slice. This avoids information leakage between the slices.

In a possible design, that the first network device obtains a second key includes:

The first network device generates the second key based on a first key, where the first key is for performing security protection on the information about the first slice and/or information that is in a process in which the user equipment accesses the first slice.

The first key is a key used by the user equipment and the network when the user equipment accesses the first slice. The first key is for performing security protection on the information about the slice and/or the information that is in a process in which the user equipment accesses the first slice. In a possible understanding, the first key is a key of the first network device. For example, the first key is a key, of the first network device, that is in a process in which the user equipment accesses the first slice. In another possible understanding, the first key is a key for the first slice, or the first key is a key of the first slice.

In this design, generating the second key based on the first key not only can ensure information security between slices, but also can reduce an amount of data exchanged between the user equipment and a network device.

In a possible design, that the first network device generates the second key based on a first key includes:

The first network device generates the second key based on the first key if an isolation requirement of the first slice is higher than an isolation requirement of the second slice.

Based on different slice isolation requirements, when an isolation requirement of a previously accessed slice is higher than an isolation requirement of a slice to be accessed currently, a new key is generated based on a currently stored key. On a basis of ensuring information security between slices, an amount of data exchanged between the user equipment and the network device is reduced.

In a possible design, that the first network device obtains a second key includes:

The first network device performs re-authentication on the user equipment; and
the first network device generates or receives the second key if the re-authentication performed by the first network device on the user equipment succeeds.

The first network device performs network re-authentication on the user equipment, so that information security between slices can be ensured. The second key may be generated by the first network device, or may be generated by another network device. If the second key is generated by the another network device, the first network device may obtain the second key from the another network device. That is, the first network device receives the second key from the another network device.

In a possible design, that the first network device performs re-authentication on the user equipment includes:

The first network device performs network re-authentication on the user equipment if an isolation requirement of the first slice is lower than an isolation requirement of the second slice.

Based on different slice isolation requirements, when an isolation requirement of a previously accessed slice is lower than an isolation requirement of a slice to be accessed currently, a new key is generated by performing network re-authentication, so that information security between slices can be further improved.

In a possible design, that the attribute of the first slice does not match the attribute of the second slice includes:
the attribute of the first slice or the attribute of the second slice does not allow simultaneous use with a slice of any other attribute;
the attribute of the first slice allows simultaneous use with only a slice that has a same slice/service type SST, where an SST of the attribute of the second slice is different from an SST of the attribute of the first slice;
the attribute of the second slice allows simultaneous use with only a slice that has a same slice/service type SST, where an SST of the attribute of the first slice is different from an SST of the attribute of the second slice;
the attribute of the first slice allows simultaneous use with only a slice that has a same slice differentiator SD, where an SD of the attribute of the second slice is different from an SD of the attribute of the first slice; or
the attribute of the second slice allows simultaneous use with only a slice that has a same slice differentiator SD, where an SD of the attribute of the first slice is different from an SD of the attribute of the second slice.

In a possible design, if the attribute of the first slice matches the attribute of the second slice, the first network device may further send a registration accept message to the user equipment.

When the attribute of the first slice matches the attribute of the second slice, the first network device and the user equipment may continue to complete a registration process.

In a possible design, that the attribute of the first slice matches the attribute of the second slice includes:
the attribute of the first slice or the attribute of the second slice allows simultaneous use with a slice of any other attribute;
the attribute of the first slice allows simultaneous use with only a slice that has a same SST, where an SST of the attribute of the second slice is the same as an SST of the attribute of the first slice;
the attribute of the second slice allows simultaneous use with only a slice that has a same SST, where an SST of the attribute of the first slice is the same as an SST of the attribute of the first slice;
the attribute of the first slice allows simultaneous use with only a slice that has a same SD, where an SD of the attribute of the second slice is the same as an SD of the attribute of the first slice;
the attribute of the second slice allows simultaneous use with only a slice that has a same SD, where an SD of the attribute of the first slice is the same as an SD of the attribute of the second slice; or
the second slice and the first slice are mapped to same single network slice selection assistance information S-NSSAI.

In a possible design, that the attribute of the first slice does not match the attribute of the second slice includes all cases that do not meet the foregoing attribute matching.

According to a second aspect, a slice isolation method is provided, and includes: User equipment sends a first request message to a first network device, where the first request message is for requesting to access a second slice; the user equipment receives a first indication message from the first network device, where the first indication message indicates the user equipment to obtain a second key; and the user equipment obtains the second key, where the second key is for performing security protection on information about the second slice and/or information that is in a process in which the user equipment accesses the second slice.

According to the foregoing method, the first network device may re-obtain the second key when currently stored information about a first slice does not match the information about the second slice that is requested to be accessed, to ensure that the information about the second slice is protected by using the second key, and can be correctly decrypted by only using the second key. This prevents the information about the second slice from being obtained by using another key, so that information security between slices is ensured.

In a possible design, that the user equipment obtains the second key includes:

The user equipment obtains a first key, where the first key is for performing security protection on information about a first slice and/or information that is in a process in which the user equipment accesses the first slice; and
the user equipment generates the second key based on the first key.

Generating the second key based on the first key not only can ensure information security between slices, but also can reduce an amount of data exchanged between the user equipment and a network device.

In a possible design, that the user equipment obtains the second key includes:

The user equipment performs re-authentication with the first network device; and
the user equipment generates or receives the second key if the re-authentication performed by the user equipment with the first network device succeeds.

The first network device performs network re-authentication on the user equipment, so that data security between slices can be ensured. The second key may be generated by the user equipment, or may be generated by a network device (for example, the first network device). If the second key is generated by the network device, the user equipment may obtain the second key from the network device. That is, the user equipment receives the second key from the network device.

In a possible design, the user equipment may further receive a registration accept message from the first network device. When an attribute of the first slice matches an attribute of the second slice, the first network device and the user equipment may continue to complete a registration process.

According to a third aspect, a slice isolation method is provided, and includes: A first network device receives a de-registration request message or sends a de-registration request message; and the first network device deletes a third key of user equipment, where the third key is for performing security protection on information about a third slice and/or information that is in a process in which the user equipment accesses the third slice, and the third slice is a slice last accessed by the user equipment.

The third key is a key used by the user equipment and a network when the user equipment accesses the third slice. The third key is for performing security protection on the information about the third slice and/or the information that is in a process in which the user equipment accesses the third slice. In a possible understanding, the third key is a key of the first network device. For example, the third key is a key, of the first network device, that is in a process in which the user equipment accesses the third slice. In another possible understanding, the third key is a key for the third slice, or the third key is a key of the third slice.

According to the foregoing method, the first network device deletes the third key of the de-registered user equipment, and regenerates a key for a subsequently accessed slice, so that information leakage between slices is avoided.

In a possible design, that the first network device deletes a third key of user equipment includes: The first network device deletes the third key of the user equipment if the first network device determines that an attribute of the third slice does not allow simultaneous use with a slice of any attribute. A key is deleted for a dedicated slice that has a high isolation requirement, to prevent the subsequently accessed slice from using the dedicated key, so that data security between slices is ensured.

In a possible design, if the first network device determines that the attribute of the third slice allows simultaneous use with a slice of another attribute, the first network device may further send a de-registration accept message to the user equipment.

In a possible design, if the first network device does not obtain the slice attribute of the third slice, the first network device may further send a de-registration accept message to the user equipment.

According to a fourth aspect, a slice isolation method is provided, and includes: User equipment sends a de-registration request message or receives a de-registration request message; and the user equipment deletes a third key of the user equipment, where a third slice is a slice last accessed by the user equipment, and the third key is for performing security protection on information about the third slice and/or information that is in a process in which the user equipment accesses the third slice. According to the foregoing method, the user equipment deletes the third key of the de-registered user equipment, and regenerates a key for a subsequently accessed slice, so that information leakage between slices is avoided.

In a possible design, that the user equipment deletes a third key of the user equipment includes: The user equipment deletes the third key of the user equipment if the user equipment determines that an attribute of the third slice does not allow simultaneous use with a slice of any attribute. A key is deleted for a dedicated slice that has a high isolation requirement, to prevent the subsequently accessed slice from using the dedicated key, so that information security between slices is ensured.

According to a fifth aspect, a slice isolation method is provided, and includes: A second network device receives rerouted information from a first network device, where the rerouted information includes information about a fourth slice of user equipment and/or information about a fifth slice that the user equipment requests to access; and
the second network device performs re-authentication on the user equipment if the information about the fourth slice does not match the information about the fifth slice, and the fifth slice has an isolation requirement.

When a slice that is requested to be accessed has an isolation requirement, the second network device performs re-authentication on the user equipment, and generates a new key. This avoids information leakage caused by using a same key when the user equipment accesses the fourth slice and the user equipment accesses the fifth slice, and ensures information security between slices.

In a possible design, if the information about the fourth slice does not match the information about the fifth slice, and the fifth slice allows simultaneous use with a slice of any other attribute, the second network device continues to perform authentication on the user equipment.

According to a sixth aspect, a communication apparatus is provided. The apparatus has a function of implementing any one of the foregoing aspects or the implementations of any one of the foregoing aspects. The function may be implemented by hardware, or may be implemented by hardware executing corresponding software. The hardware or the software includes one or more modules corresponding to the function.

According to a seventh aspect, a communication apparatus is provided, and includes: a processor and a memory. The memory is configured to store computer-executable instructions. When the apparatus runs, the processor executes the computer-executable instructions stored in the memory, and the apparatus is enabled to perform any one of the foregoing aspects or the implementations of any one of the foregoing aspects.

According to an eighth aspect, a communication apparatus is provided, and includes: a unit or a means (means) for performing steps in any one of the foregoing aspects.

According to a ninth aspect, a communication apparatus is provided, and includes a processor and an interface circuit. The processor is configured to communicate with another apparatus through an interface circuit, and perform any method provided in any one of the foregoing aspects. There are one or more processors.

According to a tenth aspect, a communication apparatus is provided, and includes a processor, configured to connect to a memory, and configured to invoke a program stored in the memory, to perform the method in any implementation of any one of the foregoing aspects. The memory may be located inside or outside the apparatus. There are one or more processors.

According to an eleventh aspect, a computer-readable storage medium is provided. The computer-readable storage medium stores instructions. When the instructions are run on a computer, a processor is enabled to perform the method according to any one of the foregoing aspects.

According to a twelfth aspect, a computer program product including instructions is provided. When the computer program product runs on a computer, the computer is enabled to perform the method according to any one of the foregoing aspects.

According to a thirteenth aspect, a chip system is provided, and includes: a processor, configured to perform the methods according to the foregoing aspects.

According to a fourteenth aspect, a communication system is provided, and includes a first network device configured to perform the first aspect or any implementation of the first aspect, and user equipment configured to perform the second aspect or any implementation of the second aspect.

According to a fifteenth aspect, a communication system is provided, and includes a first network device configured to perform the third aspect or any implementation of the third aspect, and user equipment configured to perform the fourth aspect or any implementation of the fourth aspect.

According to a sixteenth aspect, a communication system is provided, and includes a first network device, a second network device configured to perform the fifth aspect or any implementation of the fifth aspect, and user equipment.

According to a seventeenth aspect, a chip system is provided. The chip system includes a transceiver, configured to implement a function of a network device or user equipment in the method according to any one of the foregoing aspects, for example, receive or send data and/or information involved in the foregoing method. In a possible design, the chip system further includes a memory, and the memory is configured to store program instructions and/or data. The chip system may include a chip, or may include a chip and another discrete device.

For technical effects that can be achieved by any one of the sixth aspect to the seventeenth aspect and any possible implementation of the sixth aspect to the seventeenth aspect, refer to the descriptions of the technical effects that can be brought by any one of the foregoing aspects. Details are not described herein again.

### BRIEF DESCRIPTION OF DRAWINGS

FIG. 1 is a possible schematic diagram of a network architecture according to an embodiment of this application;
FIG. 2A and FIG. 2B are schematic diagrams of slice access scenarios;
FIG. 3, FIG. 4, FIG. 5, FIG. 6, FIG. 7, FIG. 8, FIG. 9, and FIG. 10 are schematic diagrams of slice isolation procedures according to embodiments of this application; and
FIG. 11 and FIG. 12 are schematic diagrams of communication apparatuses according to embodiments of this application.

### DESCRIPTION OF EMBODIMENTS

The following further describes in detail this application with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in embodiments of this application is used to represent giving an example, an illustration, or a description. Any embodiment or design scheme described as an "example" in this application should not be explained as being more preferred or having more advantages than another embodiment or design scheme. Exactly, use of the word "example" is intended to present a concept in a specific manner.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to similar technical problems.

The following describes some terms in embodiments of this application, to facilitate understanding of a person skilled in the art.
(1) User equipment (user equipment, UE), also referred to as a terminal device, is a device with a wireless transceiver function, and may communicate with one or more core network (core network, CN) devices (which may also be referred to as core devices) by using an access network device (which may also be referred to as an access device) in a radio access network (radio access network, RAN).
   The user equipment may also be referred to as an access terminal, a terminal, a subscriber unit, a subscriber station, a mobile station, a remote station, a remote terminal, a mobile device, a user terminal, a user agent, a user apparatus, or the like. The user equipment may be deployed on land, including an indoor or outdoor device, or a handheld or vehicle-mounted device, may be deployed on a water surface (such as on a ship), or may be deployed in the air (such as on an airplane, a balloon, or a satellite). The user equipment may be a cellular phone (cellular phone), a cordless phone, a session initiation protocol (session initiation protocol, SIP) phone, a smart phone (smart phone), a mobile phone (mobile phone), a wireless local loop (wireless local loop, WLL) station, a personal digital assistant (personal digital assistant, PDA), or the like. Alternatively, the user equipment may be a handheld device with a wireless communication function, a computing device, another device connected to a wireless modem, a vehicle-mounted device, a wearable device, an unmanned aerial vehicle device, a terminal in the Internet of Things or vehicle to everything, a terminal in any form in a 5th-generation (5th-generation, 5G) network or a future network, relay user equipment, a terminal in a future evolved PLMN, or the like. The relay user equipment may be, for example, a 5G residential gateway (residential gateway, RG). For example, the user equipment may be a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. A type, a kind, or the like of the terminal device is not limited in embodiments of this application.
(2) A network device is a device that can provide a wireless access function for a terminal. The network device may support at least one wireless communication technology, for example, long term evolution (long term evolution, LTE), new radio (new radio, NR), or wideband code division multiple access (wideband code division multiple access, WCDMA).

For example, the network device may include an access network device. For example, the network device includes but is not limited to: a next generation NodeB (generation NodeB, gNB) in a 5G network, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (baseband unit, BBU), a transmission reception point (transmission reception point, TRP), a transmission point (transmission point, TP), a mobile switching center, a small cell, a micro cell, or the like. Alternatively, the network device may be a radio controller, a central unit (central unit, CU), and/or a distributed unit (distributed unit, DU) in a cloud radio access network (cloud radio access network, CRAN) scenario. Alternatively, the network device may be a relay station, an access point, a vehicle-mounted device, a terminal, a wearable device, a network device in future mobile communication, a network device in a future evolved public land mobile network (public land mobile network, PLMN), or the like.

For another example, the network device may include a core network (CN) device, and the core network device includes, for example, an AMF.

The term "and/or" in this application describes an association relationship between associated objects and represents that three relationships may exist. For example, A and/or B may represent the following three cases: Only A exists, both A and B exist, and only B exists. The character "/" generally indicates an "or" relationship between the associated objects.

"A plurality of" in this application means two or more.

In addition, it should be understood that in descriptions of this application, terms such as "first" and "second" are merely for distinguishing and description, but should not be understood as indicating or implying relative importance, or should not be understood as indicating or implying a sequence.

The technical solutions of embodiments of this application may be applied to various communication systems. In a communication system, a part operated by an operator may be referred to as a public land mobile network (public land mobile network, PLMN) (which may also be referred to as an operator network or the like). The PLMN is a network established and operated by a government or an operator approved by the government for the purpose of providing a land mobile communication service for the public, and is mainly a public network in which a mobile network operator (mobile network operator, MNO) provides a mobile broadband access service for a user. The PLMN described in embodiments of this application may be specifically a network that meets a requirement of a 3GPP standard, namely, a 3GPP network. The 3GPP network generally includes but is not limited to a 5G network, a 4th-generation (4th-generation, 4G) network, or the like. For ease of description, the PLMN is used as an example for description in embodiments of this application. Alternatively, the technical solutions provided in embodiments of this application may be further applied to an LTE system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G communication system, NR, another future communication system such as 6G, and the like.

With expansion of mobile broadband access services, mobile networks also develop to better support diversified business models and meet requirements of more diversified application services and more industries. To provide better and more complete services for more industries, a network architecture of the 5G network has been adjusted compared with that of the 4G network. For example, the 5G network splits a mobility management entity (mobility management entity, MME) in the 4G network into a plurality of network functions including an AMF, a session management function (session management function, SMF), and the like.

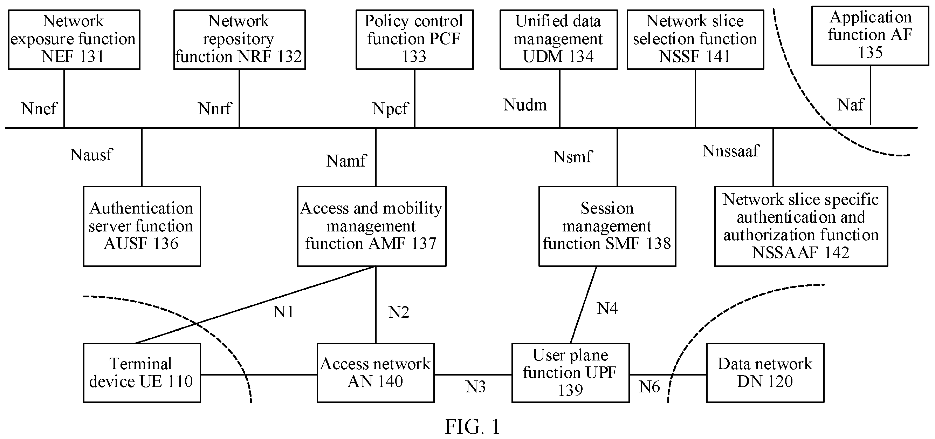

For ease of understanding of embodiments of this application, an application scenario to which this application is applicable is described by using a 5G network architecture shown in FIG. 1 as an example. FIG. 1 shows a 5G network architecture that is based on a service-based architecture in a non-roaming scenario and that is defined in a 3GPP standardization process. The network architecture may include: a terminal device (which may also be referred to as user equipment), a PLMN, and a data network (data network, DN).

The PLMN may include: a network exposure function (network exposure function, NEF) 131, a network repository function (network function repository function, NRF) 132, a policy control function (policy control function, PCF) 133, a unified data management (unified data management, UDM) function 134, an authentication server function (authentication server function, AUSF) 136, an AMF 137, a session management function (session management function, SMF) 138, a user plane function (user plane function, UPF) 139, an access network (access network, AN) 140, a network slice selection function (network slice selection function, NSSF) 141, a network slice specific authentication and authorization function (network slice specific authentication and authorization function, NSSAAF) 142, and the like. In the foregoing PLMN, a part other than the access network 140 may be referred to as a core network.

The data network DN 120 may also be referred to as a packet data network (packet data network, PDN), and may usually be deployed outside the PLMN, for example, deployed in a third-party network. For example, the PLMN may access a plurality of data networks DNs 120, and a plurality of services may be deployed on the data network DN 120, to provide a data service, a voice service, and/or another service for the terminal device 110. For example, the data network DN 120 may be a private network of a smart factory. A sensor installed in a workshop of the smart factory may be the terminal device 110, a control server of the sensor is deployed in the data network DN 120, and the control server may provide a service for the sensor. The sensor may communicate with the control server to obtain instructions of the control server, transmit collected sensor data to the control server according to the instructions, and the like. For another example, the data network DN 120 may be an internal office network of a company. A mobile phone or a computer of an employee of the company may be the terminal device 110, and the mobile phone or the computer of the employee may access information, data resources, or the like on the internal office network of the company. The terminal device 110 may establish a connection to the PLMN through an interface (for example, an N1 interface in FIG. 1) provided by the PLMN, and use a data service, a voice service, and/or another service provided by the PLMN. The terminal device 110 may further access the data network DN 120 via the PLMN, and use an operator service deployed on the data network DN 120 and/or a service provided by a third party. The third party may be a service party other than the PLMN and the terminal device 110, and may provide a data service, a voice service, and/or another service for the terminal device 110. A specific representation form of the third party may be specifically determined based on an actual application scenario, and is not limited herein.

An application function (application function, AF) 135 may or may not belong to the PLMN. Generally, the AF belongs to a third party but does not belong to the PLMN, but has a protocol relationship with the PLMN. The AF is configured to support a function of application-affected data routing, access a network exposure function NEF, interact with a policy framework for policy control, and the like.

For example, the following briefly describes a network function in the PLMN.

The AN 140, also referred to as a radio (Radio) AN, is a subnet of the PLMN, and is an implementation system between a service node (or a network function) in the PLMN and the terminal device 110. To access the PLMN, the terminal device 110 is first connected to the AN 140, and then is connected to the service node in the PLMN via the AN 140. The AN 140 in embodiments of this application may refer to an access network, or may refer to an access network device. This is not distinguished herein. The access network device is a device that provides a wireless communication function for the terminal device 110, and may also be referred to as an access device, a (R)AN device, a network device, or the like. The access network device includes but is not limited to: a gNB in a 5G system, an eNB in an LTE system, an RNC, an NB, a base station controller BSC, a BTS, an HNB, a BBU, a TRP, a TP, and a pico (pico) cell device, a mobile switching center, a network device in a future network, or the like. It may be understood that a specific type of the access network device is not limited in this application. In systems that use different radio access technologies, names of devices that have an access network device function may be different.

Optionally, in some deployments of the access device, the access device may include a CU, a DU, and the like. In some other deployments of the access device, the CU may be further divided into a CU-control plane (control plane, CP), a CU-user plane (user plan, UP), and the like. In still some deployments of the access device, the access device may alternatively be of an open radio access network (open radio access network, O-RAN or Open RAN) architecture, or the like. A specific deployment mode of the access device is not limited in this application.

The network exposure function NEF (which may also be referred to as a network exposure function entity) 131 is a control plane function provided by an operator. The network exposure function NEF 131 securely exposes the network capability to a third party through an external bidirectional interface. When another network function (such as the application function AF 135) needs to communicate with a third-party network, the NEF network function 131 may serve as a relay for communicating with a third-party network entity. The NEF network function 131 may alternatively serve as translation of identification information of a subscriber and translation of identification information of a third-party network function. For example, when the NEF network function 131 sends a subscriber permanent identifier (subscriber permanent identifier, SUPI) of the subscriber from the PLMN to a third party, the SUPI may be translated into a corresponding generic public subscription identifier (generic public subscription identifier, GPSI). Conversely, the NEF network function 131 forwards external information to the PLMN network, to prevent another network function inside the PLMN from directly contacting the outside.

The network repository function NRF 132 is a control plane function provided by the operator, and may be for maintaining real-time information of all network function services in the network.

The policy control function PCF 133 is a control plane function provided by the operator, supports a unified policy framework to govern network behavior, and provides policy rule-related, policy decision-related subscription information, or the like for another control function.

The unified data management UDM 134 is a control plane function provided by the operator, and is responsible for storing information such as the SUPI, a security context (security context), and subscription data of the subscriber of the PLMN. The subscriber of the PLMN may be specifically a user who uses a service provided by the PLMN, for example, a user who uses a chip card of a terminal device of China Telecom, a user who uses a chip card of a terminal device of China Mobile, or the like. For example, the SUPI of the subscriber may be a number of a chip card of a terminal device, or the like. The security context may be a cookie (cookie), a token (token), or the like stored on a local terminal device (for example, a mobile phone). The subscription data of the subscriber may be a matching service of the chip card of the terminal device, for example, a volume-based package of the chip card of the mobile phone.

The authentication server function AUSF 136 is a control plane function provided by the operator, and is usually for primary authentication, namely, network authentication between the terminal device 110 (the subscriber) and the PLMN.

The access and mobility management function AMF 137 is a control plane network function provided by the PLMN, and is responsible for access control and mobility management when the terminal device 110 accesses the PLMN, for example, including a function such as mobility state management, assignment of a temporary identity of a user, and user authentication and authorization.

The session management function SMF 138 is a control plane network function provided by the PLMN, and is responsible for managing a protocol data unit (protocol data unit, PDU) session of the terminal device 110. The PDU session is a channel for transmitting a PDU, and the terminal device and the DN 120 need to transmit data to each other by using the PDU session. The SMF 138 may be responsible for establishing, maintaining, and deleting the PDU session, and so on. The SMF 138 includes session-related functions such as session management (such as session establishment, modification, and release, including maintenance of a tunnel between the UPF 139 and the AN 140), selection and control of the UPF 139, service and session continuity (service and session continuity, SSC) mode selection, and roaming.

The user plane function UPF 139 is a gateway provided by the operator, and is a gateway for communication between the PLMN and the DN 120. The UPF 139 includes user plane-related functions such as data packet routing and transmission, packet detection, service usage reporting, quality of service (quality of service, QoS) processing, lawful interception, uplink packet detection, and downlink data packet storage.

The network slice selection function (network slice selection function, NSSF) 141 is a control plane network function provided by the PLMN, and is responsible for determining a network slice instance, selecting the AMF network function 137, and the like.

The network slice specific authentication and authorization function (network slice specific authentication and authorization function, NSSAAF) 142 is a control plane network function provided by the PLMN, and is configured to support slice authentication performed by the terminal device 110 and the DN.

The network functions in the PLMN shown in FIG. 1 may further include a unified data repository (unified data repository, UDR) and the like (not shown in the figure). Another network function included in the PLMN is not limited in embodiments of this application.

In FIG. 1, Nnef, Nausf, Nnrf, Npcf, Nudm, Naf, Namf, Nsmf, Nnssf, Nnssaaf, N1, N2, N3, N4, and N6 are sequence numbers of interfaces. For example, for meanings of the foregoing sequence numbers of the interfaces, refer to meanings defined in a 3GPP standard protocol, and the meanings of the sequence numbers of the interfaces are not limited in this application. It should be noted that in FIG. 1, an example in which the terminal device 110 is UE is merely used for description. Names of interfaces between the network functions in FIG. 1 are also merely examples. In specific implementation, the name of the interface in the system architecture may alternatively be another name. This is not limited in this application.

A mobility management network function in this application may be the AMF 137 shown in FIG. 1, or may be another network function that has the foregoing access and mobility management function AMF 137 in a future communication system. Alternatively, a mobility management network function in this application may be a mobility management entity (mobility management entity, MME) in an LTE system, or the like.

For ease of description, in embodiments of this application, the access and mobility management function AMF 137 is referred to as an AMF for short, the unified data management UDM 134 is referred to as a UDM for short, and the terminal device 110 is referred to as user equipment or UE. To be specific, in embodiments of this application, all AMFs described below may be replaced with the mobility management network function, all UDMs may be replaced with the unified data management, and both the user equipment and the UE may be replaced with the terminal device. It may be understood that the replacement method is also applicable to another network function that is not shown.

The network architecture (for example, the 5G network architecture) shown in FIG. 1 uses a service-based architecture and a universal interface. A conventional network element function is split into several self-contained, self-managing, and reusable network function service modules based on a network function virtualization (network function virtualization, NFV) technology. A service module set is flexibly defined to implement customized network function reconfiguration and form a service process through a unified service invoking interface. A schematic diagram of the network architecture shown in FIG. 1 may be understood as a schematic diagram of a service-based 5G network architecture in a non-roaming scenario. In this architecture, different network functions are combined in order based on a requirement in a specific scenario, so that a network capability and a network service can be customized. Therefore, dedicated networks are deployed for different services, and 5G network slicing (network slicing) is implemented. A network slicing technology enables the operator to respond to a customer requirement more flexibly and quickly, and supports flexible allocation of network resources.

The following first describes a slice in the network device.

The slice (slice) is a network slice. To put it simply, a physical network of the operator is divided into a plurality of virtual end-to-end networks. Each virtual network (including a device, an access network, a transmission network, and a core network in the network) is logically independent, so that a fault in any one of the virtual networks does not affect another virtual network. To meet diversified requirements and slice isolation, independent management, operation, and maintenance are required for services, and a customized service function and an analysis capability need to be provided. Instances of different service types may be deployed on different network slices, and different instances of a same service type may alternatively be deployed on different network slices. The slice may include a group of network functions (network functions, NFs), a subnet, and/or the like. For example, the subnet AN 140, the AMF 137, the SMF 138, and the UPF 139 in FIG. 1 may form a slice. It may be understood that only one network function of each type is schematically illustrated in FIG. 1. However, in actual network deployment, there may be a plurality of, dozens of, or hundreds of network functions or subnets. A plurality of slices may be deployed in the PLMN. Each slice may have different performance to meet requirements of different applications and different vertical industries. The operator may customize a slice based on requirements of customers in different vertical industries. The operator may alternatively allow some industry customers to enjoy greater autonomy and participate in some slice management and control functions. Slice-level authentication is a network control function with limited participation by the industry customer. To be specific, authentication and authorization are performed on a slice that a terminal device is to access, namely, "slice-level authentication", which may also be referred to as "level-2 authentication", "secondary authentication" or the like, and is referred to as "slice authentication" for short in this application.

Before being allowed to access a network or a slice, a terminal device needs to perform two-way authentication with the network and/or the slice to obtain authorization from the network and/or the slice. Usually, the network needs to perform authentication and authorization on the terminal device once or twice before the terminal device accesses the network or the slice. First, the PLMN needs to perform authentication based on an SUPI that is used by the terminal device to subscribe to the PLMN. Such authentication is referred to as primary authentication (primary authentication). Second, the PLMN needs to perform authentication based on a subscription identifier that is used by the terminal device to subscribe to a DN, namely, slice authentication, secondary authentication, or the like.

For example, FIG. 1 is used as an example. When a slice is deployed in the core network, and the UE 110 needs to access a slice, the UE 110 may provide a requested slice for the core network. The slice requested by the UE 110 may include a requested network slice selection assistance information set (requested network slice selection assistance information, requested NSSAI). The NSSAI may include one or more pieces of single network slice selection assistance information (single network slice selection assistance information, S-NSSAI). One piece of S-NSSAI is for identifying a network slice type. Alternatively, it may be understood as that the S-NSSAI is for identifying a slice, or it may be understood that the S-NSSAI is identification information of a slice. It may be understood that the slice in this application may also be referred to as a network slice, a network slice instance, S-NSSAI, or the like. A name of the slice is not limited in this application. For ease of understanding, in the following descriptions, the slice, the S-NSSAI, and the like are not strictly distinguished from each other in this application, and both the slice and the S-NSSAI may be used.

In the 3GPP standard, a format of the S-NNSAI includes at least two parts:
1. Slice/Service type (slice/service type, SST)
   The SST is for distinguishing different expected features of a slice in terms of a feature and a service. Currently, the 3GPP standard defines four standard slice types, namely, enhanced mobile broadband (enhanced mobile broadband, eMBB), ultra-reliable low-latency communication (ultra-reliable low-latency communication, URLLC), massive Internet of Things (massive Internet of Things, MIoT), and vehicle to everything (vehicle to everything, V2X).
2. Slice differentiator (slice differentiator, SD)

The SD refers to a subdivided optional feature, and is for further distinguishing different slices.

Both the SST and the SD may have non-standardized and PLMN-defined types.

Further, after the UE 110 sends a registration request to the network, a network function (such as the AMF network function 137 or the NSSF network function 141) of a core network selects, for the UE 110 based on information such as subscription data of the UE 110, the network slice requested by the UE 110, a roaming protocol, and a local configuration, a set of network slices allowed to be accessed. The set of network slices allowed to be accessed may be represented by allowed (allowed) NSSAI, and S-NSSAI included in the allowed NSSAI may be S-NSSAI that the current PLMN allows the UE 110 to access.

The primary authentication and the secondary authentication are described by using examples. For example, with development of the vertical industry and the Internet of Things, the data network DN 120 (for example, a DN serving the vertical industry) outside the PLMN also has an authentication and authorization requirement for the UE 110 accessing the DN 120. For example, a commercial company provides a game platform to provide a game service for a game player via the PLMN. On one hand, because the UE 110 used by the player accesses the game platform via the PLMN, the PLMN needs to perform authentication or authorization on an identity (an SUPI) of the UE 110, namely, primary authentication. The game player is a customer of the commercial company, and the commercial company also needs to perform authentication or authorization on the identity of the game player. For example, authentication or authorization is performed on the identity of the game player. Such authentication may be slice-specific authentication. In other words, such authentication is performed in a unit of a slice. In this case, such authentication may be referred to as slice authentication (slice authentication), or network slice-specific authentication (network slice-specific authentication and authorization, NSSAA). It should be noted that, for example, an actual meaning of the slice authentication may be authentication performed between a terminal device and a third-party network (for example, a DN or an authentication server thereof). A slice authentication result determines whether the PLMN authorizes the terminal device to access a slice provided by the PLMN. It should be further understood that the method applied to the slice authentication in this application is also applicable to a scenario such as session-specific secondary authentication (secondary authentication) or slice-specific secondary authentication. Details are not described herein.

The following describes a generic network slice template (generic network slice template, GST).

The GSMA defines a concept of the GST. The GST is mainly for formulating a set of standard network slice templates, so that the operator tailors a to-be-created, used, and operated network slice as required on a basis of ensuring interoperability. This not only facilitates interconnection, but also improves efficiency and security. The 3GPP standardization organization is formulating a related standard for the generic network slice template, so that the 5G network can better support and meet, by using an evolved system architecture and procedure, requirements for a slice feature and slice performance specified by the generic network slice template.

Currently, the GSMA defines many generic network slice template attributes (GST Attributes for short). One of the GST attributes is concerned about in embodiments of this application, and is also a GST attribute of the related standard that is being studied and formulated by the 3GPP standardization organization. Such GST attributes are referred to as a common attribute or simultaneous use of the network slice (simultaneous use of the network slice), or may be referred to as a dedicated attribute, a mutually exclusive attribute, or the like. The attribute mainly describes whether the slice can be simultaneously used with another slice. The attribute of the slice in embodiments of this application, also referred to as a slice attribute, refers to a GST attribute, and includes a common attribute. The network usually simultaneously deploys slices of various types and attributes, and whether the UE can simultaneously use a plurality of slices is a security issue that needs to be considered in a communication process. Therefore, the essence of the common attribute may also be considered as an isolation issue between slices.

A plurality of slices may share some network resources to improve utilization efficiency of the network resource. If these network resources, such as network elements or NFs, are not properly isolated, there is a risk of information leakage from each other. This problem is important for a user/an industry that has high-sensitive data or has a high requirement on network security and privacy. Usually, it is expected that a slice of the user/industry and another slice can be used by UE non-simultaneously, to prevent information leakage between slices. Conversely, for some common service data, security provided by an existing network slice is sufficient to meet a requirement, and no additional security mechanism or costs are required to enhance isolation between slices.

The GSMA further provides a suggestion on subdivision of the GST common attributes. For example, in embodiments of this application, the common attribute may be divided as follows:

When a value of the common attribute is 0, the common attribute may be shared with any other slice (a "common slice" for short).

When a value of the common attribute is 1, a slice may be simultaneously used with only a slice of a same SST type (in this case, the slice is referred to as a "type-1 slice" for short).

When a value of the common attribute is 2, a slice may be simultaneously used with only a slice of a same SD (in this case, the slice is referred to as a "type-2 slice" for short).

When a value of the common attribute is 3, a slice is not allowed to be simultaneously used with any other slice (in this case, the slice is referred to as a "dedicated slice" for short).

When a value of the common attribute is 4 to 15, a slice is customized by the operator (in this case, the slice is referred to as a "customized slice" for short).

It should be noted that, in embodiments of this application, the common attribute in the GST attribute is mainly used as an example for description. For convenience, the following descriptions do not strictly distinguish between the "attribute" and the "common attribute", which are interchangeable.

In embodiments of this application, a problem of resource sharing and security isolation between slices is mainly studied, and specific division of the foregoing GST attribute is not limited. The existing 3GPP standard has the following slice access rules:
Rule 1: UE is allowed to simultaneously access a plurality of slices. The UE may simultaneously access a maximum of eight slices in a same PLMN. When the UE accesses two to eight slices in the same PLMN, these slices need to share a same AMF.
Rule 2: UE is allowed to access different slices successively (nonsimultaneously). When the UE accesses different slices successively, the UE may use a same AMF or different AMFs, depending on many factors such as a moving position of the UE and a load degree of the AMF.

For the "dedicated slice", the existing 3GPP standard does not define a unified dedicated-slice isolation method, but is left to the operator for customization and implementation during slice deployment. For example, in a simple method, when the dedicated slice is deployed, the operator may use a private policy to prohibit the UE from accessing a plurality of slices. Certainly, in this method, original deployment flexibility of network slices and convenience of the UE are reduced.

Currently, in the standard that the 3GPP is studying and formulating, how to configure a network and UE so that the network performs automatic determining to prevent the UE from simultaneously accessing a dedicated slice (having a GST common attribute value of 3) and another slice (having any common attribute value), or how to fully meet a restriction requirement of the GST common attribute is being discussed.

A core security problem of the GST dedicated slice attribute is to ensure security isolation between slices.

In an actual communication scenario, there is a scenario (the foregoing rule 1) in which the UE simultaneously accesses a plurality of slices, and there is also a scenario (the foregoing rule 2) in which the UE successively (non-simultaneously) accesses a plurality of slices. The existing 3GPP discusses only the scenario described in the foregoing rule 1. Actually, security isolation between slices also needs to be ensured in the scenario described in the foregoing rule 2.

The following briefly describes a possible problem of information leakage between slices in the scenario described in the foregoing rule 2. It should be noted that information between slices may include control signaling, user data, and the like between the slices. The following two typical scenarios are used as examples.

Scenario A: An AMF is shared. UE successively accesses different (or the same) slices.

For example, after the UE accesses a slice 1 at a moment, and uses and completes a service on the slice 1, the UE exits the slice 1 and a network, and completes a de-registration (de-registration) procedure with the network. After a period of time, the UE needs to use a service of a slice 2, and accesses the slice 2 via the network.

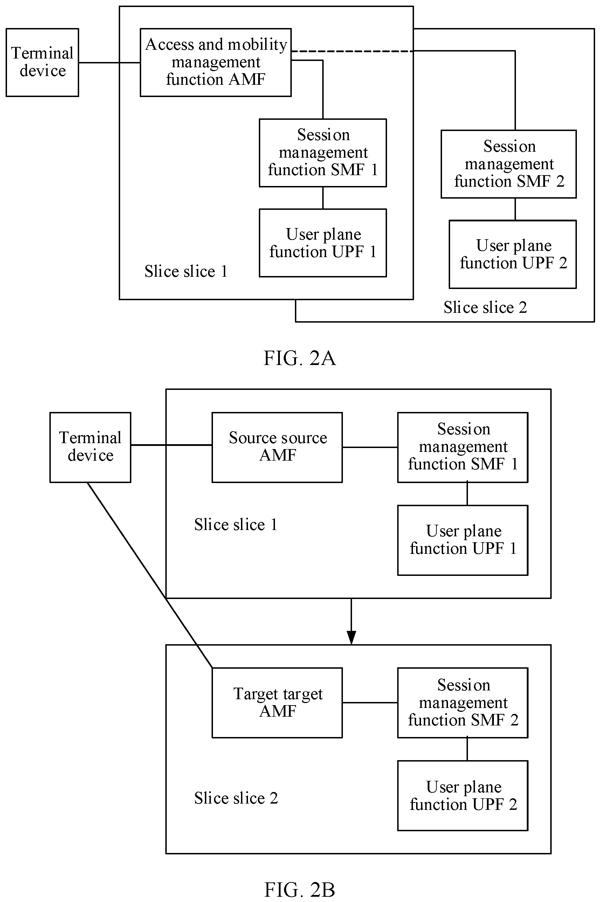

A core network part of a slice usually mainly includes network functions such as an AMF, an SMF, and a UPF. In the existing 3GPP standard, a common implementation is that the slice 1 and the slice 2 use different SMFs and UPFs, but the slice 1 and the slice 2 use the same AMF (as described in the foregoing rule 1). As shown in FIG. 2A, the slice 1 uses an SMF 1 and a UPF 1, and the slice 2 uses an SMF 2 and a UPF 2. However, the slice 1 and the slice 2 use a same AMF. In addition, although the UE uses the slice 1 and the slice 2 at an interval (non-simultaneously), and the UE further completes de-registration during the use, the UE and the network still retain and use a same set of security contexts, including, for example, an AMF key Kamf that is for deriving an encryption/integrity protection key. This is because the network may optimize network performance by reusing the security contexts.

It can be learned that although the UE accesses two different slices at different time points, the UE still uses the same set of security contexts. If one of the slices is a slice that needs to be isolated from another slice, there is still a risk of leakage of information about the slice. Because a security context of the slice is the same as a security context of the another slice, and the information about the slice may also be obtained by using the security context of the another slice. Therefore, security isolation (such as key isolation) should also be performed between slices in the scenario in which different slices are accessed at different time points.

Scenario B: An AMF is not shared. UE successively accesses different (or the same) slices, or AMF re-allocation occurs.

For example, after the UE accesses a slice 1 via an AMF 1 at a moment, and uses and completes a service on the slice 1, the UE exits the slice 1 and a network, and completes a de-registration (de-registration) procedure with the network. The UE re-registers with the network via an AMF 2 and accesses a slice 2. Although the UE accesses the AMF 2, due to a requirement of network performance optimization, the network usually requires the AMF 1 to store a security context of the UE, for example, a key Kamf, and transfers the security context to the AMF 2. To be specific, even if the UE accesses different slices at different time points when the AMF is not shared, the used security context may still be the same, and key-level security isolation is not performed between the slice 1 and the slice 2 either.

Another example is the scenario in which the UE performs AMF re-allocation (AMF re-allocation). The scenario occurs when the UE is in a connected state or is not de-registered. As shown in FIG. 2B, when the UE registers with the network, the network device first processes a request of the UE via a source (Source) AMF, and initiates a network authentication procedure. After the authentication is completed and information (for example, NSSAI) about a slice that the UE requests to access is obtained, a target (target) AMF is determined to be used to continue to process the slice that the UE requests to access. This procedure is referred to as a UE re-allocation procedure. The re-allocation procedure may also be triggered when the UE moves.

In the re-allocation procedure, the UE first accesses the network via the source AMF and stores information (including a security context of the UE) about the UE in the source AMF. It should be noted that in this case, the UE may have accessed a slice 1 or may have not accessed a slice 1. When the network determines to use the target AMF to continue to serve the UE, the security context stored in the source AMF may be transferred to the target AMF. To be specific, although the UE does not simultaneously access the slice 1 and the slice 2, the security context used by the UE in the slice 2 may be obtained from both AMFs. Therefore, key-level security isolation is not implemented between the slice 2 and the slice 1.

Based on the descriptions of the scenario A and the scenario B, it may be learned that when the UE accesses a plurality of slices at different time points, there may be a risk of information leakage between slices.

In view of this, this application provides a slice isolation method to avoid information leakage between slices. In a registration process, a first network device obtains information about a first slice of a user. The first network device may obtain a second key if the information about the first slice does not match information about a second slice that the user equipment requests to access. The second key is for performing security protection on the information about the second slice and/or information about the user equipment. This can ensure that after the user equipment accesses the to-be-accessed second slice, a key (that is, the second key) used by a network and the user equipment is different from a key used by the network and the user when the user equipment accesses another slice (for example, the first slice), so that information leakage between slices is avoided. Alternatively, in a de-registration process, a first network device receives a de-registration request message from user equipment, and the first network device deletes a third key. The third key is a key used by a network and the user equipment when the user equipment accesses a third slice, and the third slice is a slice last accessed by the user equipment. A key previously used by the user equipment to access another slice is deleted. This can ensure that a key used by the network and the user equipment in a subsequently accessed slice is different from the key previously that is in a process in which the another slice is accessed, so that information leakage between slices is avoided. Alternatively, in an AMF re-allocation process, a first network device sends a rerouted message of user equipment to another network device. If information about a slice obtained by the first network device does not match information about a slice that the user equipment requests to access, the first network device may initiate re-authentication on the user equipment. In the AMF re-allocation process, an authentication procedure is re-initiated for the user equipment, and a key is regenerated. The regenerated key is different from a key stored in a source AMF. This avoids using a same key when different slices are accessed, so that information leakage between slices is avoided.

The slice isolation method provided in embodiments of this application may be applied to the communication system shown in FIG. 1.

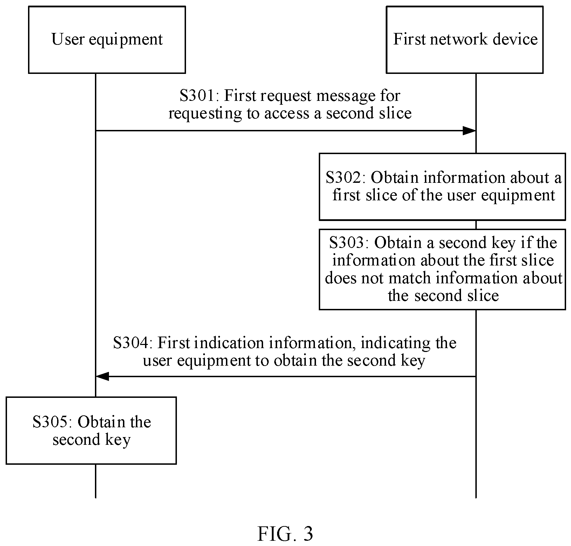

A slice isolation process provided in the registration process is shown in FIG. 3. The process includes the following steps.

S301: User equipment sends a first request message to a first network device, and the first network device receives the first request message, where the first request message is for requesting to access a second slice.

For example, the first network device is an AMF.

The first request message may be a registration request (Registration Request) message. The first request message includes identification information of the user equipment and information about the second slice.

The identification information of the user equipment is an identifier of the user equipment, for example, a globally unique temporary identifier (globally unique temporary identifier, GUTI) of the user equipment, and/or a subscription concealed identifier (subscription concealed identifier, SUCI) of the user equipment. The SUCI may be obtained by performing privacy protection processing (for example, encryption processing) on an SUPI.

The information about the second slice includes identification information of the second slice. Optionally, the information about the second slice may further include an attribute of the second slice. The identification information of the second slice includes S-NSSAI or NSSAI. The NSSAI is a slice identifier set, and may include identifiers (that is, a plurality of pieces of S-NSSAI) of a plurality of slices. The second slice may be a slice identified by any one of the plurality of pieces of S-NSSAI. The attribute of the second slice may be determined based on a common attribute value. For example, when the common attribute value is 0, the second slice is a common slice. When the common attribute value is 1, the second slice is a type-1 slice. When the common attribute value is 2, the second slice is a type-2 slice. When the common attribute value is 3, the second slice is a dedicated slice.

In a possible example, after receiving the first request message, the first network device may check whether a security context or a context (including the security context) of the user equipment exists. For example, the first network device determines whether the user equipment has accessed a network before (for example, determines whether an identifier of a user is the GUTI). If it is determined that the user equipment has not accessed the network device before, the first network device determines that the context of the user equipment does not exist, and the first network device may perform network authentication on the user equipment, so that the user equipment accesses the network. If it is determined that the user equipment has accessed a network before, the first network device further determines a network device or a network function used by the user equipment to access the network when the network is accessed before (for example, a previously accessed network device may be determined by using the GUTI, where content of the GUTI includes a network identifier and a network function (AMF) identifier).

S302: The first network device obtains information about a first slice of the user equipment.

If the user equipment accesses the network last time via the first network device, the first network device directly obtains the information about the first slice of the user equipment from the first network device; or if the user equipment accesses the network last time via another network device (not the first network device), the first network device obtains the information about the first slice of the user equipment from the another network device. Optionally, the context or the security context of the user equipment includes the information about the first slice. In addition, optionally, the context or the security context of the user equipment includes an attribute of the first slice and/or a first key (for example, Kamf). The first key is a key used by the user equipment and the network when the user equipment accesses the first slice.

The first slice of the user equipment is any one of one or more slices that the user equipment subscribes to, or the first slice is a slice that has been accessed before, recently accessed, or currently accessed by the user equipment. The information about the first slice includes identification information of the first slice. Optionally, the information about the first slice may further include at least one of the following: the attribute of the first slice, a security context of the first slice, and/or the first key. The first key is for performing security protection on the information about the first slice and/or information that is in a process in which the user equipment accesses the first slice.

In a possible example, the first network device may obtain the information about the first slice when obtaining the context or the security context of the user equipment. Optionally, the context or the security context of the user equipment includes the information about the first slice, and the first network device obtains the information about the first slice from the context or the security context of the user equipment. Alternatively, optionally, the first network device obtains the information about the first slice from the first network device or another network device.

S303: The first network device obtains a second key if the information about the first slice does not match the information about the second slice that the user equipment requests to access, where the second key is for performing security protection on the information about the second slice and/or information that is in a process in which the user equipment accesses the second slice.

The second key is a key used by the user equipment and the network when the user equipment accesses the second slice.

If the information about the first slice includes the attribute of the first slice, and the information about the second slice includes the attribute of the second slice, in S303, if the attribute of the first slice does not match the attribute of the second slice, the first network device obtains the second key.

That the attribute of the first slice does not match the attribute of the second slice includes that the attribute of the first slice is incompatible with the attribute of the second slice, or the attribute of the first slice is mutually exclusive to the attribute of the second slice.

That the attribute of the first slice does not match/is incompatible with/is mutually exclusive to the attribute of the second slice includes at least one of the following:
(11) A common attribute of the first slice and/or a common attribute of the second slice do/does not allow simultaneous use with a slice of any other attribute.
   For example, the first slice and/or the second slice are/is dedicated slices/a dedicated slice. For example, the first slice is a dedicated slice, and the second slice is a slice of any attribute. For another example, the second slice is a dedicated slice, and the first slice is a slice of any attribute. For another example, the first slice is a dedicated slice, the second slice is a dedicated slice, and the first slice and the second slice are different dedicated slices.
(12) The attribute of the first slice allows simultaneous use with only a slice that has a same slice/service type SST, where an SST of the attribute of the second slice is different from an SST of the attribute of the first slice.
(13) The attribute of the second slice allows simultaneous use with only a slice that has a same slice/service type SST, where an SST of the attribute of the first slice is different from an SST of the attribute of the second slice.
(14) The attribute of the first slice allows simultaneous use with only a slice that has a same slice differentiator SD, where an SD of the attribute of the second slice is different from an SD of the attribute of the first slice.
(15) The attribute of the second slice allows simultaneous use with only a slice that has a same slice differentiator SD, where an SD of the attribute of the first slice is different from an SD of the attribute of the second slice.

The first slice in (12) and (14) is a non-dedicated slice, but is incompatible with the common attribute of the second slice. For example, the attribute of the first slice is a type-1 slice and the attribute of the second slice is a type-2 slice, or the attribute of the first slice is a type-2 slice and the attribute of the second slice is a type-1 slice. The second slice in (13) and (15) is a non-dedicated slice, but is incompatible with the common attribute of the first slice. For example, the attribute of the second slice is a type-1 slice and the attribute of the first slice is a type-2 slice, or the attribute of the second slice is a type-2 slice and the attribute of the first slice is a type-1 slice.

In a possible example, when the first network device obtains the second key, the first network device generates the second key based on the first key, where the first key is for performing security protection on the information about the first slice and/or the information that is in a process in which the user equipment accesses the first slice. For example, the first network device is an AMF, and the AMF generates a second slice key based on Kamf (for performing security protection on the information about the first slice and/or the information that is in a process in which the user equipment accesses the first slice).

In another possible example, when the first network device obtains the second key, the first network device re-initiates network authentication on the user equipment or initiates slice authentication on the user equipment. If the authentication re-initiated by the first network device on the user equipment succeeds or the slice authentication initiated by the first network device on the user equipment succeeds, the first network device generates or receives the second key. For example, the first network device is an AMF, and the AMF includes a security anchor function (Security Anchor Function or SEAF). When the network authentication succeeds, the security anchor function SEAF generates the second key. For another example, the AMF does not include an SEAF. To be specific, the AMF and the SEAF are separately deployed in different network devices. When the network authentication succeeds, after generating the second key, the security anchor function SEAF sends the second key to the AMF. This procedure ensures that the second key is independent of the first key. The first key cannot be obtained based on the second key, and the second key cannot be obtained based on the first key.

In still another possible example, corresponding isolation requirements may be set based on different common attributes. The isolation requirements corresponding to different common attributes are not limited in this embodiment of this application. For example, a larger common attribute value indicates a higher isolation requirement. For example, an isolation requirement of the dedicated slice is the highest, an isolation requirement of the type-2 slice is the second highest, an isolation requirement of the type-1 slice is lower than that of the type-2 slice, and an isolation requirement of the common slice is the lowest.

In this example, when the first network device obtains the second key, if an isolation requirement of the first slice is higher than an isolation requirement of the second slice, the first network device generates the second key based on the first key; or if an isolation requirement of the first slice is lower than an isolation requirement of the second slice, the first network device performs network re-authentication on the user equipment. If the re-authentication succeeds, the first network device generates or receives the second key.

Compared with the re-authentication, a process of generating the second key based on the first key is simple, and has few execution steps and less interaction between the user equipment and the network.

S304: The first network device sends first indication information to the user equipment, and the user equipment receives the first indication information, where the first indication information indicates the user equipment to obtain the second key.

The first indication information may indicate the user equipment to generate the second key based on the first key.

In an implementation, the first indication message may be non-access stratum (non-access stratum, NAS) security mode command (security mode command, SMC) signaling.

Step S304 is an optional step. If the first network device initiates network re-authentication on the user equipment, the step S304 does not need to be performed. It should be noted that, in a process of network re-authentication initiated by the first network device on the user equipment, the first network device (for example, including the AMF and the SEAF) sends one or more other messages such as an authentication request message, and the user equipment may also reply to the one or more messages. This is not limited herein.

S305: The user equipment obtains the second key.

In a possible example, in S305, the user equipment obtains the first key, where the first key is for performing security protection on the information about the first slice and/or the information that is in a process in which the user equipment accesses the first slice; and the user equipment generates the second key based on the first key.

The user equipment may store the first key.

In another possible example, the user equipment performs re-authentication with the first network device; and if the re-authentication performed by the user equipment with the first network device succeeds, the user equipment generates the second key. The key and the first key cannot be obtained through mutual derivation.

It should be noted that the first network device and the user equipment obtain the second key in a same manner (including generating the second key by using a same parameter), to ensure that the first network device and the user equipment subsequently use a same key to perform security protection on communication information.

In the registration process, if the attribute of the first slice matches the attribute of the second slice, the first network device may further send a registration accept message to the user equipment, and the user equipment receives the registration accept message.

That the attribute of the first slice matches the attribute of the second slice includes that the attribute of the first slice is compatible with the attribute of the second slice, or the attribute of the first slice is not mutually exclusive to the attribute of the second slice.

That the attribute of the first slice matches/is compatible with/is not mutually exclusive to the attribute of the second slice includes at least one of the following:
(21) The attribute of the first slice or the attribute of the second slice allows simultaneous use with the slice of any other attribute.
   For example, the first slice and/or the second slice are/is common slices/a common slice.
(22) The attribute of the first slice allows simultaneous use with only a slice that has a same SST, where an SST of the attribute of the second slice is the same as an SST of the attribute of the first slice.
   For example, both the first slice and the second slice are type-1 slices, and their SSTs are the same.
(23) The attribute of the second slice allows simultaneous use with only a slice that has a same SST, where an SST of the attribute of the first slice is the same as an SST of the attribute of the first slice.
   For example, both the first slice and the second slice are type-1 slices, and their SSTs are the same.
(24) The attribute of the first slice allows simultaneous use with only a slice that has a same SD, where an SD of the attribute of the second slice is the same as an SD of the attribute of the first slice.
   For example, both the first slice and the second slice are type-2 slices, and their SDs are the same.
(25) The attribute of the second slice allows simultaneous use with only a slice that has a same SD, where an SD of the attribute of the first slice is the same as an SD of the attribute of the second slice.
   For example, both the first slice and the second slice are type-2 slices, and their SDs are the same.
(26) The second slice and the first slice are mapped to same single network slice selection assistance information S-NSSAI.
   The first slice and the second slice may be mapped to a same S-NSSAI slice in a home network (Home PLMN). The first slice and the second slice may have different slice identifiers S-NSSAI, SST types or SDs in respective PLMNs.
(27) There is another possibility in which there are a plurality of types of slices but attributes of the slices may be compatible.

If the information about the first slice does not identify the attribute of the first slice, it may be considered that the attribute of the first slice allows simultaneous use with a slice of any other attribute. For example, the first slice may be considered as a common slice. Alternatively, if the information about the first slice does not identify the attribute of the second slice, it may be considered that the attribute of the second slice allows simultaneous use with a slice of any other attribute. For example, the second slice may be considered as a common slice.

If the information about the first slice does not identify the attribute of the first slice, or the information about the second slice does not identify the attribute of the second slice, the user equipment is a legacy device. For example, a 5G standard includes an R15 version, an R16 version, and an R17 version. If a GST common attribute is newly introduced in R17, devices in R15 and R16 may be referred to as legacy devices. For "backward compatibility", the legacy device may still be used in the network, and a slice accessed by the legacy device may be considered as a common slice.

The following further describes the slice isolation process shown in FIG. 3 by using two specific embodiments.

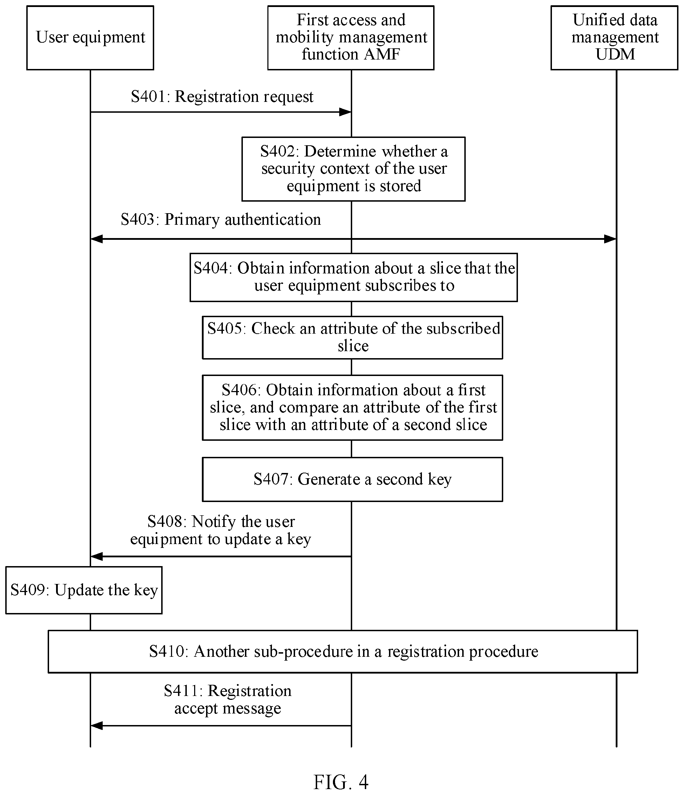

When accessing a network last time, user equipment accesses the network via a first AMF. For a slice isolation process, refer to FIG. 4 (nonsimultaneously shared AMF). The process includes the following steps.

S401: The user equipment sends a registration request to the first AMF.

The registration request includes an identifier (such as a GUTI or an SUCI) of the user equipment and identification information (for example, S-NSSAI, which may be any piece of S-NSSAI in NSSAI that is requested to be accessed) of a second slice that is requested to be accessed. Optionally, the registration request includes an attribute of the second slice.

S402: The first AMF determines whether a security context (security context) of the user equipment is stored.

For example, the first AMF determines, based on the identifier GUTI of the user equipment, whether a valid security context of the user equipment is stored in the first AMF. If the valid security context of the user equipment is stored in the first AMF, S403 is skipped, and S404 is performed. If the valid security context of the user equipment is not stored in the first AMF, S403 is performed.

The security context is a valid security context. This means that the first AMF can successfully verify a message authentication code (message authentication code, MAC) in the registration request message by using the security context (for example, a first key Kamf).

(Optional) step S403: The AMF initiates network authentication or primary authentication (Primary Authentication) performed by the user equipment with the first AMF and UDM.

After S403 is performed, S404 to S409 are skipped, and S410 is performed, to perform another registration step in an existing standard procedure.

(Optional) step S404: The first AMF obtains information about a slice that the user equipment subscribes to, that is, obtains and retrieves subscription information (subscription information).

The first AMF obtains, locally (from a storage unit of the first AMF) or from the UDM (which may alternatively be another NF), the information (for example, slice identifier NSSAI, which may include one or more pieces of S-NSSAI) about the slice that the user equipment subscribes to. For example, the first AMF first locally searches for whether the information about the slice that the user equipment subscribes to exists. If the information exists, the first AMF locally obtains the information about the slice that the user equipment subscribes to. If the information does not exist, the first AMF sends a request message to the UDM, and obtains, from the UDM, the information about the slice that the user equipment subscribes to.

The first AMF receives and obtains common attribute information of the subscribed slice from the obtained information about the slice that the user equipment subscribes to.

(Optional) step S405: The first AMF checks an attribute of the subscribed slice.

For example, optionally, whether the information about the subscribed slice includes attribute information of the subscribed slice is checked. There may be one or more subscribed slices, and the one or more slices respectively correspond to one or more slice attributes. That is, each slice corresponds to attribute information of one slice.

If the subscribed slice includes only a single slice attribute, the first AMF skips S406 to S409, and performs S410.

If the information about the subscribed slice includes more than one slice attribute, and the more than one slice attribute is a compatible attribute, the first AMF skips S406 to S409, and performs S410, or the first AMF may alternatively perform S407.

In other cases, the first AMF performs S406.

(Optional) step S406: The first AMF obtains first slice information (that is, information about a first slice), and compares an attribute of the first slice with the attribute of the second slice that is requested to be accessed.

The first AMF obtains the first slice information locally (from the storage unit of the first AMF) or from the UDM (which may alternatively be another NF). The first slice information is slice information stored in a context of the user equipment. The first slice information includes one or more pieces of S-NSSAI, to indicate a slice indicated by the one or more pieces of S-NSSAI that the user equipment is accessing or has accessed. The first slice information further includes attribute information of the first slice (corresponding to the one or more pieces of S-NSSAI). In an optional implementation, if the first AMF determines, based on the attribute of the first slice and the attribute of the second slice, that the attribute of the first slice does not match the attribute of the second slice, and an isolation requirement of the first slice is higher than or not lower than an isolation requirement of the second slice, the first AMF returns to perform S403.

In an optional implementation, if the first AMF determines, based on the attribute of the first slice and the attribute of the second slice, that the attribute of the first slice does not match the attribute of the second slice, the first AMF returns to perform S403.

In an optional implementation, if the first AMF determines, based on the attribute of the first slice and the attribute of the second slice, that the attribute of the first slice does not match the attribute of the second slice, and an isolation requirement of the first slice is lower than or not higher than an isolation requirement of the second slice, the first AMF performs S407.

In an optional implementation, if the first AMF determines, based on the attribute of the first slice and the attribute of the second slice, that the attribute of the first slice does not match the attribute of the second slice, the first AMF performs S407. If the first AMF determines, based on the attribute of the first slice and the attribute of the second slice, that the attribute of the first slice matches the attribute of the second slice, the first AMF skips S407 to S409, and performs S410.

It should be noted that there may be one or more obtained attributes of the first slice, and there may be one or more obtained attributes of the second slice. A quantity of first slices (pieces of S-NSSAI) and a quantity of second slices (pieces of S-NSSAI) may be the same or different. An attribute of each slice corresponds to one slice (piece of S-NSSAI). That is, each slice (piece of S-NSSAI) corresponds to one attribute. For example, the user equipment accesses two slices last time, and identifiers are respectively S-NSSAI-1 and S-NSSAI-2. An attribute value of the slice S-NSSAI-1 is 0, namely, a common slice, and an attribute value of the slice S-NSSAI-2 is 2, namely, a slice that is only allowed to be simultaneously used in case of a same SD value (the two slices are shared by the user equipment last time, which implies that an SD value of the slice S-NSSAI-1 is the same as an SD value of the slice S-NSSAI-2). The AMF stores the identifiers and the attribute values of the slice S-NSSAI-1 and the slice S-NSSAI-2 in the context corresponding to the user equipment, and further stores a shared key Kamf. For example, the user equipment requests to access another slice S-NSSAI-3 this time, and an attribute value of the slice S-NSSAI-3 is 3, that is, the slice is a dedicated slice. In this example, the first AMF may obtain two attributes of the first slice and one attribute of the second slice.

In a scenario of the attribute values "0" to "3", the attribute "3" cannot coexist (that is, be incompatible) with other attributes, and the attribute "0" may be compatible with all attributes. Therefore, a scenario of a plurality of pieces of S-NSSAI includes eight possible compatible attribute combinations, namely, four possible single attribute combinations (when there is one attribute), three possible compatible attribute combinations (when there are two attributes), and one possible compatible attribute combination (when there are three attributes). For first slice attribute information and second slice attribute information that respectively include a plurality of pieces of S-NSSAI, there are 8x8=64 possible attribute combinations in the two pieces of slice information. For ease of description, in this embodiment of this application, a scenario in which information about one first slice is stored and the user equipment requests to access one second slice is used as an example for description. For a case of a plurality of slices or a plurality of attribute values, refer to the case shown in the scenario, and descriptions are not provided one by one. Specifically, the following cases are involved:
(31) An exclusiveness requirement of the second slice that is requested to be accessed is higher than exclusiveness of the first slice. To be specific, the isolation requirement of the second slice is higher than the isolation requirement of the first slice.

For example, the attribute of the second slice is a dedicated slice (an attribute value is 3), and the attribute of the first slice is a non-dedicated slice (an attribute value is 0, 1, or 2).

For another example, the attribute value of the second slice is 1 or 2, and the attribute of the first slice is a common slice (the attribute value is 0).

(32) An exclusiveness requirement of the second slice that is requested to be accessed is lower than exclusiveness of the first slice. To be specific, the isolation requirement of the second slice is lower than the isolation requirement of the first slice.

For example, the attribute of the first slice is a dedicated slice (the attribute value is 3), and the attribute of the second slice is a non-dedicated slice (the attribute value is 0, 1, or 2).

For another example, the attribute value of the first slice is 1 or 2, and the attribute of the second slice is a common slice (the attribute value is 0).

(33) There is another case in which the second slice that is requested to be accessed is incompatible with the first slice.

(33) includes the cases shown in (31) and (32). For other cases, refer to the related descriptions in FIG. 3. Details are not listed one by one herein.

(34) The second slice that is requested to be accessed and the first slice may be simultaneously used.

For example, the second slice and the first slice are a same dedicated slice. For another example, the second slice and the first slice are common slices. For another case in which the attribute of the second slice is compatible with the attribute of the first slice, refer to the related descriptions in FIG. 3. Details are not listed one by one herein.

For (31) and (33), the first AMF returns to perform S403, and uses a strong isolation method to ensure information security between slices. In another optional implementation, the first AMF performs S407, that is, uses a same execution method as (32).

For (32), the first AMF performs S407, and uses an isolation method with low costs to ensure information security between slices. In another optional implementation, the first AMF performs S40, that is, uses a same execution method as (31) and (33).

For (34), the first AMF skips S407 to S409, and performs S410, and no isolation is required between slices.

(Optional) step S407: The first AMF starts a key update procedure to update the key Kamf stored in the AMF.

In S407, the first AMF generates the second key (an updated key Kamf) based on the first key (for example, the key Kamf).

(Optional) step S408: The first AMF notifies the user equipment to update the first key Kamf, and sends a required key update parameter to the user equipment. A message sent in S408 may be a "non-access stratum" (non-access stratum, NAS) security mode command (security mode command, SMC) message. (Optional) step S409: The user equipment updates the stored first key Kamf based on the received key update parameter to generate the second key Kamf (to be specific, the originally stored key Kamf is the first key, and the updated key Kamf is the second key).

S410: The user equipment completes another sub-procedure in a registration procedure. Refer to a related standard procedure, and details are not described herein.

S411: The first AMF sends a registration accept message to the user equipment.

In another possible implementation, S406 may be simplified as follows: The first AMF checks whether isolation needs to be performed on the second slice. If isolation needs to be performed on the second slice, the first AMF returns to perform S403 again, or returns to perform S707 (perform S707 to S709) again. If isolation does not need to be performed on the second slice, the first AMF performs S410.

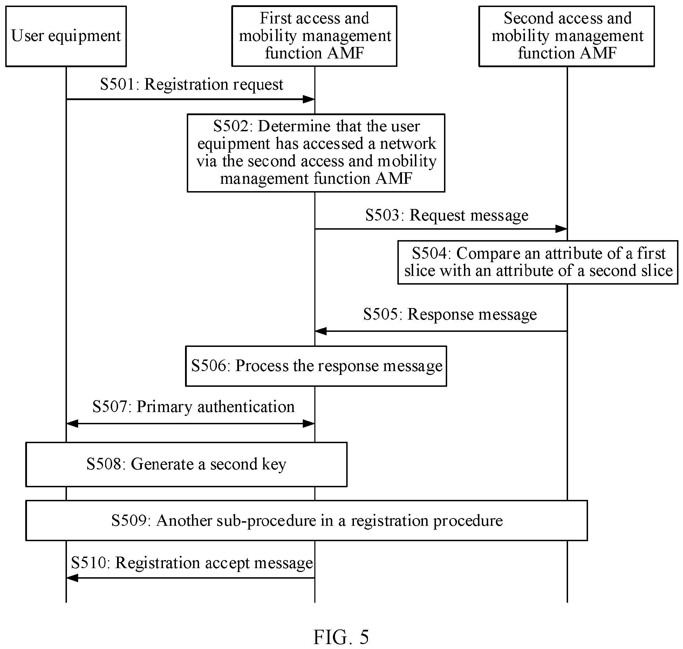

When accessing a network last time, the user equipment accesses the network via a second AMF, and the user equipment accesses the network this time via a first network device. For a slice isolation process, refer to FIG. 5 (non-shared AMF), and the process includes the following steps.

For a process of S501, refer to S401.

S502: The first AMF determines that the user equipment has accessed the network (for example, the registration request includes a GUTI), and has accessed the network via the second AMF (for example, the GUTI includes an ID of the AMF). To be specific, an AMF previously accessed by the user equipment has changed (the second AMF and the first AMF are not a same AMF).

The first AMF may be considered as a new (new) AMF or a target (target) AMF. The second AMF may be considered as an old (old) AMF or a source/initial (Source/Initial) AMF.

S503: The first AMF sends a request message to the second AMF (for example, a user equipment context transfer request UE context transfer request message), to obtain information about a first slice stored in the second AMF.

The request message may include information about a second slice that the user equipment requests to access.

S504: The second AMF compares a stored attribute of the first slice with an attribute of the second slice that is requested to be accessed. In an optional implementation, S504 is optional. That is, the second AMF does not perform the comparison.

S505: The second AMF sends a response message to the first AMF (for example, a user equipment context transfer response UE context transfer response message).

The second AMF may determine, based on a comparison result in S504, information to be carried in the response message in S505.

For example, if the attribute of the first slice matches the attribute of the second slice, the response message may include a security context (for example, include a first key Kamf) of the first slice, and the like.

For another example, if the attribute of the first slice does not match the attribute of the second slice, the response message may include an insecurity context but not include a security context (for example, a first key Kamf). Alternatively, the response message may include a context that does not affect slice isolation (either a security context or an insecurity context, such as an SUPI of the user equipment) but not include a context (for example, a first key Kamf) that affects the slice isolation. Optionally, the response message includes identification information (NSSAI) and the attribute of the first slice. Optionally, the response message includes indication information, notifying the first AMF that the user equipment has passed security authentication, and that a security context of the user equipment exists but does not match the attribute of the second slice, which causes a failure in sending the security context (for example, the first key Kamf), and indicating the first AMF to perform re-authentication (network authentication or slice authentication, where the network authentication includes primary authentication and optional slice authentication). Alternatively, the second AMF first updates the first key Kamf (an updated key is a second key Kamf) or performs re-authentication, and then sends, to the first AMF, the response message carrying an updated security context (for example, the second key Kamf and a parameter required for key updating, and optionally, key indication information indicating that the key has been updated or the key is the second key). Optionally, the first AMF may update a key or perform re-authentication for slice isolation.

For another example, if the second AMF cannot determine whether the attribute of the first slice matches the attribute of the second slice, for example, if the second AMF does not store the attribute of the first slice, or the request message sent by the first AMF does not include the attribute of the second slice, the second AMF may consider that the attribute of the first slice does not match the attribute of the second slice.

In an optional implementation, if the second AMF does not perform S504, to be specific, the second AMF considers that the attribute of the first slice matches (compatible) with the attribute of the second slice, S505 may be performed based on an existing procedure.

In an optional implementation, the second AMF includes the indication information in the message in S505, indicating the first AMF to perform primary re-authentication (to be specific, the second key is not generated based on the first key), or update the key Kamf (to be specific, the first key is sent, to indicate the first AMF to generate the second key based on the first key).

S506: The first AMF processes the response message.

The first AMF determines and performs a subsequent procedure based on the response message.

If the response message includes the first key and/or the second key, the identification information and the attribute of the first slice, the attribute of the first slice is compared with the attribute of the second slice that is requested to be accessed.

In an optional implementation, if the first AMF determines, based on the attribute of the first slice and the attribute of the second slice, that the attribute of the first slice does not match the attribute of the second slice, and an isolation requirement of the first slice is higher than or not lower than an isolation requirement of the second slice, the first AMF performs S507.

In an optional implementation, if the first AMF determines, based on the attribute of the first slice and the attribute of the second slice, that the attribute of the first slice does not match the attribute of the second slice, and an isolation requirement of the first slice is lower than or not higher than an isolation requirement of the second slice, the first AMF performs S508.

In an optional implementation, if the first AMF determines, based on the attribute of the first slice and the attribute of the second slice, that the attribute of the first slice does not match the attribute of the second slice, the first AMF performs S507.

In an optional implementation, if the first AMF determines, based on the attribute of the first slice and the attribute of the second slice, that the attribute of the first slice does not match the attribute of the second slice, the first AMF performs S508.

If the first AMF determines, based on the attribute of the first slice and the attribute of the second slice, that the attribute of the first slice matches the attribute of the second slice, the first AMF skips S507 and S508, and performs S509.

In an optional implementation, if the response message includes the second key Kamf and the parameter required for key updating, the first AMF performs S508.

In an optional implementation, the first AMF performs a step based on the indication information included in the message in S505. To be specific, if the first AMF is indicated to perform primary re-authentication, S507 is performed. Alternatively, if the first AMF is indicated to update the key Kamf, S508 is performed.

For a process of S507, refer to S403.

The first AMF initiates primary authentication (Primary Authentication) performed by the user equipment with the network.

After S507 is performed, an existing standard procedure is performed to generate the second key (skipping a key update procedure in S508), and S509 is performed to perform another registration step in the existing standard procedure.

For a process of S508, refer to S407 to S409.

For a process of S509 and S510, refer to S410 and S411.

Optionally, either of S504 and S506 may be performed, or both of S504 and S506 may be performed. It should be noted that in S506, the first AMF may re-perform determining independently of the second AMF (S504). This is because the first AMF and the second AMF may be located in different PLMNs or different security domains, or the first AMF may not completely trust a determining result of the second AMF.

In addition, the first AMF may alternatively obtain the information about the first slice via another NF (a non-second AMF, such as an unstructured data storage function (unstructured data storage function, UDSF)). Alternatively, the first AMF may indirectly interact with the second AMF via another NF (for example, a UDSF). This is not limited herein.

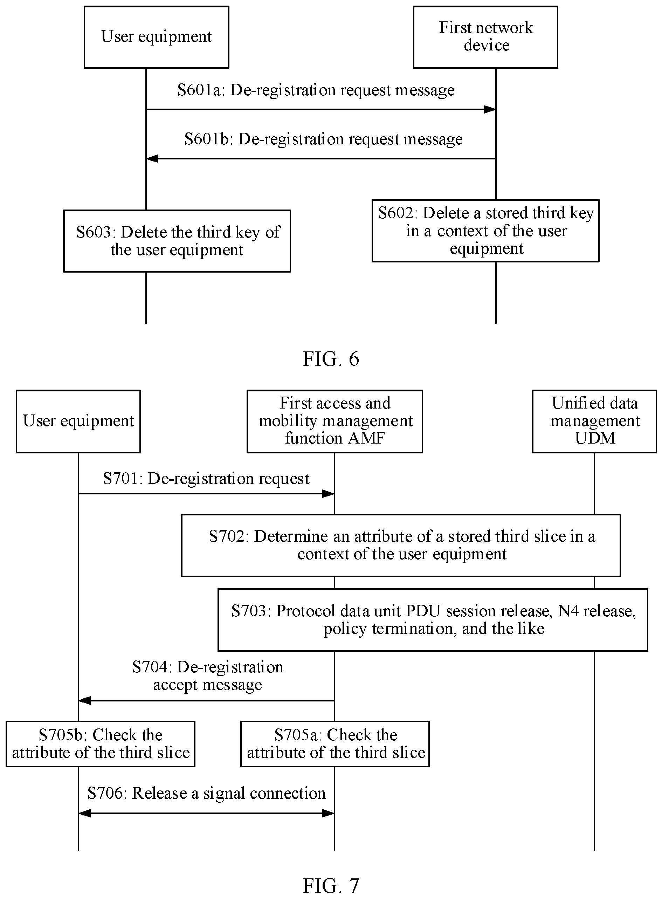

A slice isolation process provided in the de-registration process is shown in FIG. 6. The process includes the following steps.

S601a: User equipment sends a de-registration request message to a first network device, and the first network device receives the de-registration request message.

In S601a, the de-registration process is initiated by the user equipment.

S601b: The first network device sends a de-registration request message to the user equipment, and the user equipment receives the de-registration request message.

In S601b, the de-registration process is initiated by the first network device.

It may be understood that either S601a or S601b may be performed.

S602: The first network device deletes a locally stored (namely, stored in the first network device) third key in a context of the user equipment. The third key is for performing security protection on information about a third slice or information that is in a process in which the user equipment accesses the third slice. The third slice is a slice (corresponding to an S-NSSAI identifier) last accessed by the user equipment or any one of/each of a plurality of slices (NSSAI corresponding to a plurality of S-NSSAI identifiers or including a plurality of pieces of S-NSSAI) (when a plurality of slices are allowed to be accessed simultaneously, attributes of these slices are compatible by default and a set of keys may be shared).

In S602, the first network device may determine that an attribute of the third slice does not allow simultaneous use with a slice of any other attribute (to be specific, the third slice is a dedicated slice, and an attribute value is 3), and the first network device deletes the locally stored third key in the context of the user equipment.

Optionally, in S602, the first network device may determine that the user equipment subscribes to a slice with a plurality of attributes (for example, locally stored user subscription information or user subscription information of the user obtained from UDM), where a slice incompatible with the attribute of the third slice exists, and the first network device deletes the locally stored third key in the context of the user equipment.

Optionally, in S602, the first network device may determine that the attribute of the third slice does not allow simultaneous use with a slice of any other attribute (to be specific, the third slice is a dedicated slice, and an attribute value is 3), the first network device may determine that the user equipment subscribes to only the slice (for example, locally stored user subscription information or user subscription information of the user obtained from UDM), and the first network device retains (that is, does not delete) the locally stored third key in the context of the user equipment.

The attribute of the third slice does not allow simultaneous use with the slice of any other attribute (to be specific, the third slice is the dedicated slice, and the attribute value is 3). The first network device deletes the locally stored third key in the context of the user equipment.

Optionally, the first network device sends indication information to another network device or network function (for example, the UDM or another AMF), to indicate the network device or the network function to delete the stored third key in the context of the user equipment.

Optionally, the first network device sends indication information to the user equipment, to indicate the user equipment to delete the stored third key.

S603: The user equipment deletes the third key.

Optionally, a sequence of performing S602 and S603 is not limited.

In a possible example, in S603, the user equipment may determine that the attribute of the third slice does not allow simultaneous use with the slice of any other attribute, and the user equipment deletes the third key.

In another possible example, in S603, the user equipment receives the indication information from the first network device, and the user equipment deletes the third key.

In the de-registration process, the attribute of the third slice allows simultaneous use with a slice of another attribute or the attribute of the third slice is not obtained. In this case, when the user equipment initiates the de-registration procedure, the first network device may further send a de-registration accept message to the user equipment, and the user equipment receives the de-registration accept message; or when the first network device initiates the de-registration procedure, the user equipment may further send a de-registration accept message to the first network device, and the first network device receives the de-registration accept message.

It may be understood that S602 and 5603 may be performed before the de-registration process, during the de-registration process, or after the de-registration process.

It should be noted that, after the de-registration process is completed, if the user equipment accesses a dedicated slice, the user equipment needs to perform re-authentication (and optionally, slice authentication) with a network, to generate a new key to access the dedicated slice.

In this embodiment, a sensitive/important security context is deleted, so that such security context can be prevented from being reused, to ensure information security between slices.

The following further describes the slice isolation process shown in FIG. 6 by using two specific embodiments.

User equipment initiates a de-registration procedure. For a slice isolation process, refer to FIG. 7. The process includes the following steps.

S701: The user equipment sends a de-registration request message (De-registration Request) to an AMF, and the AMF receives the de-registration request message.

S702: The AMF confirms an attribute of a third slice in a stored context of the user equipment. The third slice is a slice (corresponding to an S-NSSAI identifier) last accessed by the user equipment or any one of/each of a plurality of slices (NSSAI corresponding to a plurality of S-NSSAI identifiers or including a plurality of pieces of S-NSSAI) (when a plurality of slices are allowed to be accessed simultaneously, it indicates that attributes of these slices are compatible and a set of keys may be shared).

The AMF may obtain the attribute of the third slice locally or from UDM (which may alternatively be another NF). For example, the AMF first determines whether the attribute of the third slice exists in the locally stored context of the user equipment. If the attribute exists, the AMF obtains the attribute of the third slice from the context of the user equipment. If the attribute does not exist, the AMF obtains the attribute of the third slice from the UDM.

S703: Perform procedures such as PDU session release, N4 session release (N4 session release), and policy termination (policy termination).

S704: The AMF sends a de-registration accept message (De-registration Accept), and the user equipment receives the de-registration accept message.

S705a: The AMF checks the attribute of the third slice.

S705b: The user equipment checks the attribute of the third slice.

If only a slice of a compatible attribute is subscribed to (for example, the attribute of the third slice is a common slice, and allows simultaneous use with a slice of another attribute), or the attribute of the third slice is not obtained, the AMF and the user equipment retain a third key, and perform S706.

If a slice of an incompatible attribute is subscribed to (for example, the attribute of the third slice is a dedicated slice, and does not allow simultaneous use with a slice of any attribute), the AMF and the user equipment delete a third key, and perform S706.

S706: The user equipment and the AMF release a signal connection.

It should be noted that S702 may alternatively be performed in a process of performing S703 (there are a plurality of exchanged messages), or performed by using an existing message in S703 (for example, by adding an information element (information element)), with no need to add a separate exchanged message.

In addition, a sequence of performing S705a and S705b is not limited, and S705a and S705b may be performed before S704, or may be performed after S706.

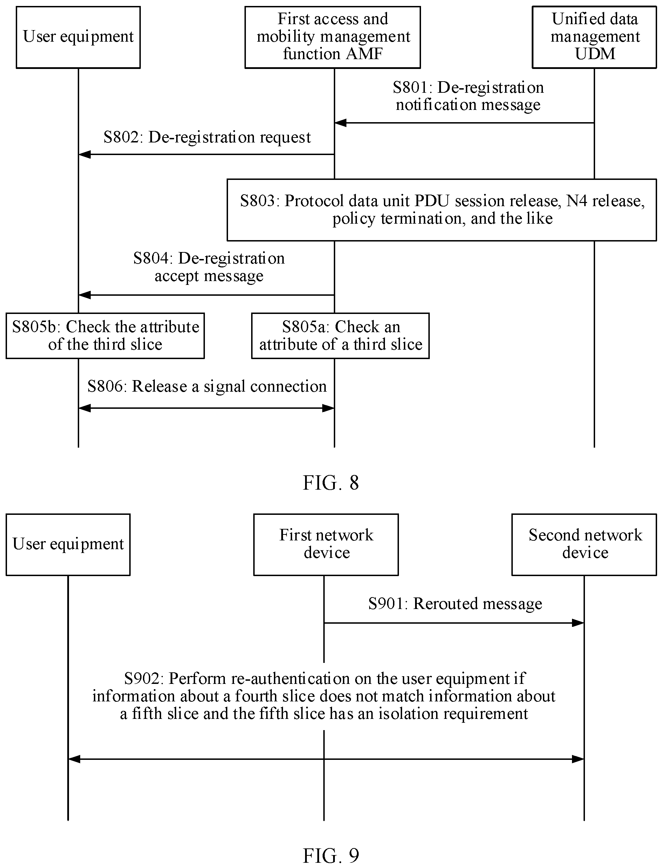

A network device initiates a de-registration procedure. For a slice isolation process, refer to FIG. 8. The process includes the following steps.

(Optional) step S801: UDM sends a de-registration notification message, and an AMF receives the de-registration notification message.

In S801, the UDM initiates a de-registration procedure.

Optionally, the de-registration notification message may include an attribute of a third slice or include attributes of all slices subscribed to by user equipment. Optionally, the de-registration notification message may further include indication information to indicate the AMF to delete a third key. To be specific, the UDM determines security sensitivity or an isolation requirement based on information about the third slice or information about a slice subscribed to by the user equipment.

S802: The AMF sends a de-registration request message to the user equipment, and the user equipment receives the de-registration request message.

Alternatively, the AMF may initiate a de-registration procedure by itself.

The de-registration request message is an optional message. To be specific, the de-registration procedure may be notified to the user equipment, or may not be notified to the user equipment. If the de-registration request message is sent, optionally, the AMF may further indicate the user equipment to delete the third key. The AMF determines, based on the attribute that is of the third slice and that is sent by the UDM, whether to delete the third key (refer to S705a), or the AMF determines, based on the indication information of the UDM, whether to delete the third key.

For a process of S803, refer to S703.

S804: The user equipment sends a de-registration accept message, and the AMF receives the de-registration accept message.

S805a: The AMF checks the attribute of the third slice.

Refer to S702 and S802 or S705a to obtain and check the attribute of the third slice.

S805b: The user equipment checks the attribute of the third slice.

Refer to S705b.

For a process of S806, refer to S706.

S805a may be performed in any step (including before step S801, and therefore, the AMF may initiate the de-registration procedure by itself). S805b may be performed in any step after S802.

The slice isolation methods shown in FIG. 7 and FIG. 8 are applicable to both a nonsimultaneously shared AMF and a non-shared AMF.

A slice isolation process provided in the AMF re-allocation process is shown in FIG. 9. The process includes the following steps.

S901: A first network device sends a rerouted message to a second network device, and the second network device receives the rerouted message.

The first network device may be understood as a source network device in the AMF re-allocation process, and the second network device may be understood as a target network device in the AMF re-allocation process.

The rerouted message includes information about a fourth slice of user equipment and/or information about a fifth slice that the user equipment requests to access. The fourth slice is a currently stored slice that is previously accessed or currently accessed by a user.

The information about the fourth slice includes identification information of the fourth slice, and optionally includes a fourth key and/or an attribute of the fourth slice. The fourth key is for performing security protection on the information about the fourth slice and/or information that is in a process in which the user equipment accesses the fourth slice. The information about the fifth slice includes identification information of the fifth slice, and optionally, an attribute of the fifth slice.

A typical scenario of AMF re-allocation is as follows: The user equipment has completed network-level authentication (primary authentication) with the first network device, and generated a security context (for example, the fourth key kamf). The first network device determines that another suitable second AMF serves the user equipment. In this case, interaction between the user equipment and the first network device is converted into interaction between the user equipment and the second network device.

Before S901, the first network device may further check whether a currently stored security context of the user equipment has been for performing security protection on information about a slice (for example, the fourth slice) or whether there is the information about the fourth slice. If the currently stored security context has not been for performing security protection or there is no information about the fourth slice, the fourth slice does not exist. The first network device may assume that the attribute of the (non-existent) fourth slice is a common slice that can match any slice, and then perform S901. If the currently stored security context has been for performing security protection or there is the information about the fourth slice, the fourth slice exists.

If the information about the fourth slice matches the information about the fifth slice (similarly, if the information about the fifth slice does not exist, the fifth slice is considered as a common slice that can match any slice), the first network device performs S901.

If the information about the fourth slice does not match the information about the fifth slice, and an isolation requirement of the fourth slice is higher than or not lower than an isolation requirement of the fifth slice (for example, the fourth slice has an isolation requirement (a non-common slice) and the fifth slice is a common slice), the first network device generates a fifth key based on the fourth key, and then performs S901.

If the information about the fourth slice does not match the information about the fifth slice, and an isolation requirement of the fourth slice is lower than or not higher than an isolation requirement of the fifth slice (for example, the fourth slice is a common slice that has no isolation requirement and the fifth slice is a dedicated slice), the first network device performs S901.

In an optional implementation, if the information about the fourth slice does not match the information about the fifth slice, the first network device generates the fifth key based on the fourth key, and then performs S901.

S902: The second network device performs re-authentication on the user equipment if the information about the fourth slice does not match the information about the fifth slice and the fifth slice has an isolation requirement.

The second network device generates the fifth key if the re-authentication performed by the second network device on the user equipment succeeds.

The second network device continues to register the user equipment if the information about the fourth slice matches the information about the fifth slice.

If the information about the fourth slice does not match the information about the fifth slice, and the fourth slice has no isolation requirement (to be specific, the fourth slice allows simultaneous use with a slice of any other attribute), the second network device continues to register the user equipment.

It should be noted that the first network device may compare the information about the fourth slice with the information about the fifth slice, and/or the second network device may compare the information about the fourth slice with the information about the fifth slice. When the compared slice information does not match, the first network device and/or the second network device may perform S902 to perform re-authentication to generate the fifth key (not based on the fourth key) or generate the fifth key based on the fourth key.

The following further describes the slice isolation process shown in FIG. 9 by using a specific embodiment.

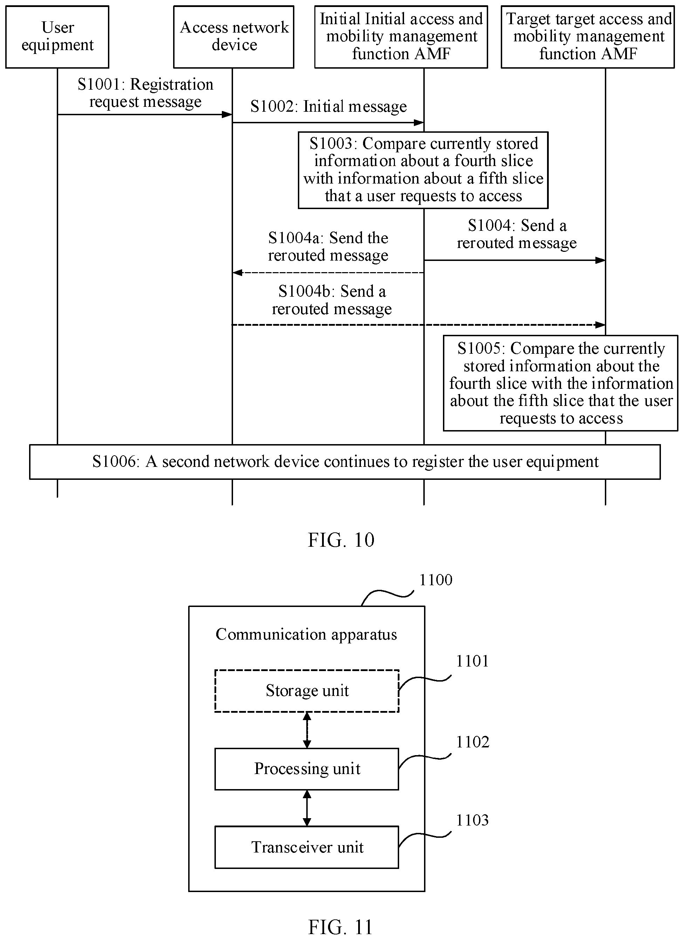

For a slice isolation process, refer to FIG. 10. The process is mainly applicable to a non-shared AMF, and includes the following steps.

S1001: User equipment sends a registration request message to an access network device.

The registration request message is for requesting to access a fifth slice.

S1002: The access network device sends an initial message (Initial UE message) to an initial/source (Initial/Source) AMF. The initial/source (Initial/Source) AMF may be a first network device.

The initial message includes the registration request message.

S 1003: The source AMF initiates network authentication with the user equipment (not shown in FIG. 10), and establishes a security context (including a key Kamf) of the user equipment to perform security protection on a message exchanged between the user equipment and a network (for example, perform encryption and integrity protection on a NAS message). The source AMF determines that AMF re-allocation needs to be performed, and that a target (target) AMF serves the user equipment. The target (target) AMF may be a second network device. The source AMF compares currently stored information about a fourth slice with information about the fifth slice that a user requests to access.

If the information about the fourth slice matches the information about the fifth slice (if the information about the fifth slice does not exist, the fifth slice is considered as a common slice that can match any slice), the first network device performs S 1004. If the information about the fourth slice does not match the information about the fifth slice, and the fourth slice has an isolation requirement (a non-common slice), the first network device generates a fifth key based on a fourth key, and then performs S1004. If the information about the fourth slice does not match the information about the fifth slice, and the fourth slice has no isolation requirement (a common slice), the first network device performs S1004.

In an optional implementation, if the information about the fourth slice does not match the information about the fifth slice, and an isolation requirement of the fourth slice is higher than or not lower than an isolation requirement of the fifth slice (for example, the fourth slice has an isolation requirement (a non-common slice) and the fifth slice is a common slice), the first network device (the initial AMF) generates the fifth key based on the fourth key, and then performs S1004.

In an optional implementation, if the information about the fourth slice does not match the information about the fifth slice, and an isolation requirement of the fourth slice is lower than or not higher than an isolation requirement of the fifth slice (for example, the fourth slice is a common slice that has no isolation requirement and the fifth slice is a dedicated slice), the first network device (the initial AMF) performs S1004.

In an optional implementation, if the information about the fourth slice does not match the information about the fifth slice, the first network device (the initial AMF) generates the fifth key based on the fourth key, and then performs S1004.

S1004: The source AMF sends a rerouted message (Rerouted message) to the target AMF.

The rerouted message includes the information about the fourth slice and/or the information about the fifth slice. The information about the fourth slice includes identification information of the fourth slice, and optionally includes the fourth key and/or an attribute of the fourth slice. The fourth key is for performing security protection on the information about the fourth slice and/or information that is in a process in which the user equipment accesses the fourth slice. The information about the fifth slice includes identification information of the fifth slice, and optionally, an attribute of the fifth slice.

Optionally, the source AMF may forward the rerouted message through the access network device (as shown in S 1004a and S 1004b). If the rerouted message is forwarded by the access network device, a rerouted message in S 1004b may be different from the rerouted message in S1004.

S 1005: The target AMF compares the currently stored information about the fourth slice with the information about the fifth slice that the user requests to access.

If the information about the fourth slice does not match the information about the fifth slice, and the fifth slice has the isolation requirement, the second network device first performs re-authentication on the user equipment and generates the fifth key, and then performs S1006. The re-authentication process is similar to that in S1003, and a difference lies in that the target AMF initiates network authentication with the user equipment.

In an optional implementation, if the information about the fourth slice does not match the information about the fifth slice, and the isolation requirement of the fourth slice is higher than or not lower than the isolation requirement of the fifth slice (for example, the fourth slice has an isolation requirement (a non-common slice) and the fifth slice is a common slice), the target AMF generates the fifth key based on the fourth key, and then performs S1006.

In an optional implementation, if the information about the fourth slice does not match the information about the fifth slice, and the isolation requirement of the fourth slice is lower than or not higher than the isolation requirement of the fifth slice (for example, the fourth slice is a common slice that has no isolation requirement and the fifth slice is a dedicated slice), the target AMF performs S1006.

In an optional implementation, if the information about the fourth slice does not match the information about the fifth slice, the target AMF generates the fifth key based on the fourth key, and then performs S1006.

In an optional implementation, if the information about the fourth slice does not match the information about the fifth slice, the target AMF initiates network authentication (primary authentication) with the user equipment and generates the fifth key (not based on the fourth key), and then performs S 1006. If the information about the fourth slice matches the information about the fifth slice, the second network device performs S1006.

If the information about the fourth slice does not match the information about the fifth slice, and the fourth slice has no isolation requirement (to be specific, the fourth slice allows simultaneous use with a slice of any other attribute), the second network device performs S1006.

S1006: The second network device continues to register the user equipment.

Both of the comparison processes of S1003 and S 1005 may be performed, or either of the two comparison processes may be performed.

With reference to the foregoing embodiments, it can be learned that the slice isolation processes provided in embodiments of this application are applicable to a scenario shown in the following Table 1.

**Table 1**

| Procedure scenario | Whether an AMF is shared | Description |
|---|---|---|
| Registration (Registration) | Nonsimultaneously shared AMF | Refer to FIG. 4 |
| Registration | Non-shared AMF | Refer to FIG. 5 |
| De-registration (De-registration) | Nonsimultaneously shared AMF/Non-shared AMF | Initiated by user equipment. Refer to FIG. 7 |
| De-registration | Nonsimultaneously shared AMF/Non-shared AMF | Initiated by a network device. Refer to FIG. 8 |
| AMF re-allocation (Re-Allocation) during registration | Non-shared AMF | Refer to FIG. 10 |

It can be learned from the foregoing embodiments that the slice isolation method provided in embodiments of this application can ensure secure isolation between slices, and avoid information leakage between the slices. Embodiments of this application can ensure security of shared network infrastructure, and can also ensure security of a local network.

It may be understood that embodiments provided in this application may be used independently, or may be used in combination.

FIG. 11 is a possible example of a block diagram of a communication apparatus according to this application. The communication apparatus 1100 may exist in a form of software or hardware. The communication apparatus 1100 may include: a processing unit 1102 and a transceiver unit 1103. In an implementation, the transceiver unit 1103 may include a receiving unit and a sending unit. The processing unit 1102 is configured to control and manage an action of the communication apparatus 1100. The transceiver unit 1103 is configured to support the communication apparatus 1100 in communicating with another network entity. The communication apparatus 1100 may further include a storage unit 1101, configured to store program code and data of the communication apparatus 1100.

The processing unit 1102 may be a processor or a controller, for example, may be a CPU, a general-purpose processor, a DSP, an ASIC, an FPGA, or another programmable logic device, a transistor logic device, a hardware component, or any combination thereof. The processing unit may implement or execute logical blocks, modules, and circuits in various examples described with reference to content disclosed in this application. Alternatively, the processor may be a combination of processors implementing a computing function, including, for example, a combination of one or more microprocessors, or a combination of a DSP and a microprocessor. The storage unit 1101 may be a memory. The transceiver unit 1103 is an interface circuit of the apparatus, and is configured to receive a signal from another apparatus. For example, when the apparatus is implemented in a form of a chip, the transceiver unit 1103 is an interface circuit used by the chip to receive a signal from another chip or apparatus, or an interface circuit used by the chip to send a signal to another chip or apparatus.

The communication apparatus 1100 may be user equipment and/or a network device in any one of the foregoing embodiments, or may be a chip used in the user equipment and/or the network device. For example, when the communication apparatus 1100 is the user equipment and/or the network device, the processing unit 1102 may be a processor, and the transceiver unit 1103 may be a transceiver. Optionally, the transceiver may include a radio frequency circuit, and the storage unit may be, for example, a memory. For example, when the communication apparatus 1100 is the chip used in the user equipment and/or the network device, the processing unit 1102 may be a processor, and the transceiver unit 1103 may be an input/output interface, a pin, or a circuit. The processing unit 1102 may execute computer-executable instructions stored in the storage unit. Optionally, the storage unit is a storage unit in the chip, such as a register or a cache, or the storage unit may be a storage unit, such as a ROM, another type of static storage device that can store static information and instructions, or a RAM, that is in the user equipment and/or the network device and that is located outside the chip.

In a first embodiment, the communication apparatus 1100 may be used in a first network device.

Specifically, the transceiver unit 1103 is configured to obtain information about a first slice of user equipment.

The processing unit 1102 is configured to obtain a second key if the information about the first slice does not match information about a second slice that the user equipment requests to access. The second key is for performing security protection on the information about the second slice and/or information that is in a process in which the user equipment accesses the second slice.

In an implementation, the information about the first slice includes an attribute of the first slice, and the information about the second slice includes an attribute of the second slice.

When the first network device obtains the second key if the information about the first slice does not match the information about the second slice that the user equipment requests to access, the processing unit 1102 is specifically configured to obtain the second key if the attribute of the first slice does not match the attribute of the second slice.

In an implementation, when obtaining the second key, the processing unit 1102 is specifically configured to generate the second key based on a first key. The first key is for performing security protection on the information about the first slice and/or information that is in a process in which the user equipment accesses the first slice.

In an implementation, when generating the second key based on the first key, the processing unit 1102 is specifically configured to generate the second key based on the first key if an isolation requirement of the first slice is higher than an isolation requirement of the second slice.

In an implementation, when obtaining the second key, the processing unit 1102 is specifically configured to: perform re-authentication on the user equipment; and generate the second key if the re-authentication performed on the user equipment succeeds.

In an implementation, when performing re-authentication on the user equipment, the processing unit 1102 is specifically configured to perform network re-authentication on the user equipment if an isolation requirement of the first slice is lower than an isolation requirement of the second slice.

In an implementation, that the attribute of the first slice does not match the attribute of the second slice includes:
the attribute of the first slice or the attribute of the second slice does not allow simultaneous use with a slice of any other attribute;
the attribute of the first slice allows simultaneous use with only a slice that has a same slice/service type SST, where an SST of the attribute of the second slice is different from an SST of the attribute of the first slice;
the attribute of the second slice allows simultaneous use with only a slice that has a same slice/service type SST, where an SST of the attribute of the first slice is different from an SST of the attribute of the second slice;
the attribute of the first slice allows simultaneous use with only a slice that has a same slice differentiator SD, where an SD of the attribute of the second slice is different from an SD of the attribute of the first slice; or
the attribute of the second slice allows simultaneous use with only a slice that has a same slice differentiator SD, where an SD of the attribute of the first slice is different from an SD of the attribute of the second slice.

In an implementation, the transceiver unit 1103 is further configured to send a registration accept message to the user equipment if the attribute of the first slice matches the attribute of the second slice.

In an implementation, that the attribute of the first slice matches the attribute of the second slice includes:
the attribute of the first slice or the attribute of the second slice allows simultaneous use with a slice of any other attribute;
the attribute of the first slice allows simultaneous use with only a slice that has a same SST, where an SST of the attribute of the second slice is the same as an SST of the attribute of the first slice;
the attribute of the second slice allows simultaneous use with only a slice that has a same SST, where an SST of the attribute of the first slice is the same as an SST of the attribute of the first slice;
the attribute of the first slice allows simultaneous use with only a slice that has a same SD, where an SD of the attribute of the second slice is the same as an SD of the attribute of the first slice;
the attribute of the second slice allows simultaneous use with only a slice that has a same SD, where an SD of the attribute of the first slice is the same as an SD of the attribute of the second slice; or
the second slice and the first slice are mapped to same single network slice selection assistance information S-NSSAI.

The communication apparatus 1100 may be used in user equipment.

Specifically, the transceiver unit 1103 is configured to: send a first request message to a first network device, where the first request message is for requesting to access a second slice; and receive a first indication message from the first network device, where the first indication message indicates the user equipment to obtain a second key.

The processing unit 1102 is configured to obtain the second key. The second key is for performing security protection on information about the second slice and/or information that is in a process in which the user equipment accesses the second slice.

In an implementation, when obtaining the second key, the processing unit 1102 is specifically configured to: obtain a first key, where the first key is for performing security protection on information about a first slice and/or information that is in a process in which the user equipment accesses the first slice; and generate the second key based on the first key.

In an implementation, when obtaining the second key, the processing unit 1102 is specifically configured to perform re-authentication with the first network device; and the user equipment generates the second key if the re-authentication performed with the first network device succeeds.

In an implementation, the transceiver unit 1103 is further configured to receive a registration accept message from the first network device.

In a second embodiment, the communication apparatus 1100 may be used in a first network device.

Specifically, the transceiver unit 1103 is configured to receive a de-registration request message, or send a de-registration request message.

The processing unit 1102 is configured to delete a third key of user equipment, where a third slice is a slice last accessed by the user equipment, and the third key is for performing security protection on information about the third slice and/or information that is in a process in which the user equipment accesses the third slice.

In an implementation, when deleting the third key of the user equipment, the processing unit 1102 is specifically configured to delete the third key of the user equipment if the processing unit determines that an attribute of the third slice does not allow simultaneous use with a slice of any attribute.

In an implementation, the transceiver unit 1103 is further configured to send a de-registration accept message to the user equipment if it is determined that the attribute of the third slice allows simultaneous use with a slice of another attribute.

In an implementation, the transceiver unit 1103 is further configured to send a de-registration accept message to the user equipment if the slice attribute of the third slice is not obtained.

The communication apparatus 1100 may be used in user equipment.

Specifically, the transceiver unit 1103 is configured to send a de-registration request message, or receive a de-registration request message.

The processing unit 1102 is configured to delete a third key of the user equipment, where a third slice is a slice last accessed by the user equipment, and the third key is for performing security protection on information about the third slice and/or information that is in a process in which the user equipment accesses the third slice.

In an implementation, when deleting the third key of the user equipment, the processing unit 1102 is specifically configured to delete the third key of the user equipment if the processing unit determines that the third slice does not allow simultaneous use with a slice of any attribute.

In a third embodiment, the communication apparatus 1100 may be used in a second network device.

Specifically, the transceiver unit 1103 is configured to receive rerouted information from a first network device, where the rerouted information includes information about a fourth slice of user equipment and/or information about a fifth slice that the user equipment requests to access.

The processing unit 1102 is configured to perform re-authentication on the user equipment if the information about the fourth slice does not match the information about the fifth slice, and the fifth slice has an isolation requirement.

In an implementation, the processing unit 1102 is further configured to continue to perform authentication on the user equipment if the information about the fourth slice does not match the information about the fifth slice, and the fifth slice allows simultaneous use with a slice of any other attribute.

It may be understood that for a specific implementation process and corresponding beneficial effects when the communication apparatus performs the foregoing slice isolation method, refer to the related descriptions in the foregoing method embodiment. Details are not described herein again.

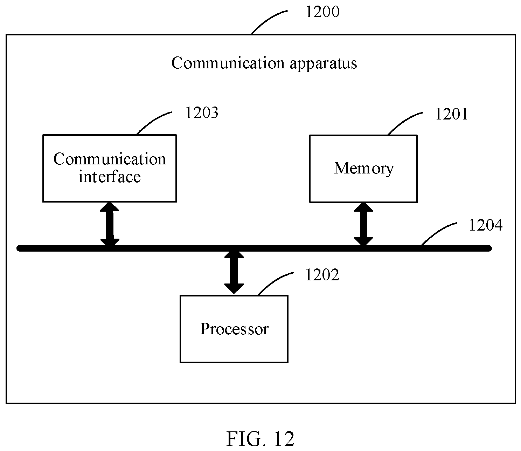

FIG. 12 is a schematic diagram of a communication apparatus according to this application. The communication apparatus may be the foregoing mobility management network element or the terminal device. The communication apparatus 1200 includes: a processor 1202, a communication interface 1203, and a memory 1201. Optionally, the communication apparatus 1200 may further include a communication line 1204. The communication interface 1203, the processor 1202, and the memory 1201 may be connected to each other through the communication line 1204. The communication line 1204 may be a peripheral component interconnect (peripheral component interconnect, PCI for short) bus, an extended industry standard architecture (extended industry standard architecture, EISA for short) bus, or the like. The communication line 1204 may be classified into an address bus, a data bus, a control bus, and the like. For ease of representation, only one bold line is for representation in FIG. 12, but this does not mean that there is only one bus or only one type of bus.

The processor 1202 may be a CPU, a microprocessor, an ASIC, or one or more integrated circuits configured to control execution of programs in the solutions in this application.

The communication interface 1203 is configured to communicate, by using any transceiver-type apparatus, with another device or a communication network, for example, an Ethernet, a RAN, a wireless local area network (wireless local area network, WLAN), or a wired access network.

The memory 1201 may be a ROM or another type of static storage device that can store static information and instructions, a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer. However, the memory 1201 is not limited thereto. The memory may exist independently, and is connected to the processor through the communication line 1204. Alternatively, the memory may be integrated with the processor.

The memory 1201 is configured to store computer-executable instructions for performing the solutions in this application, and the processor 1202 controls execution. The processor 1202 is configured to execute the computer-executable instructions stored in the memory 1201, to implement a registration method of a terminal device provided in the foregoing embodiments of this application.

Optionally, the computer-executable instructions in embodiments of this application may also be referred to as application program code. This is not specifically limited in embodiments of this application.

An embodiment of this application further provides a computer storage medium, storing a computer program. When the computer program is executed by a computer, the computer may be enabled to perform the foregoing slice isolation method.

An embodiment of this application further provides a computer program product that includes instructions. When the computer program product runs on a computer, the computer is enabled to perform the foregoing slice isolation method.

An embodiment of this application further provides a communication system. The communication system includes a first network device and user equipment. Optionally, the communication system further includes a second network device.

A person of ordinary skill in the art may understand that various numbers such as "first" and "second" in this application are merely for differentiation for ease of description, and are not intended to limit the scope of embodiments of this application. The numbers also indicate a sequence. The term "and/or" describes an association relationship between associated objects and represents that three relationships may exist. For example, A and/or B may represent the following three cases: Only A exists, both A and B exist, and only B exists. The character "/" generally indicates an "or" relationship between associated objects. "At least one" means one or more. At least two means two or more. "At least one", "any one", or a similar expression thereof indicates any combination of these items, including a single item (piece) or any combination of a plurality of items (pieces). For example, at least one item (piece, type) of a, b, or c may indicate: a, b, c, a and b, a and c, b and c, or a, b, and c, where a, b, and c may be singular or plural. "A plurality of means two or more than two, and another quantifier is similar to this. In addition, an element (element) that appears in a singular form such as "a", "an", and "the" does not mean "one or only one" unless otherwise specified in the context, but means "one or more". For example, "a device" means one or more such devices.

All or some of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (Solid State Drive, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk drive, a removable magnetic disk, a CD-ROM, or a storage medium of any other form in the art. For example, the storage medium may connect to the processor, so that the processor can read information from the storage medium and write information into the storage medium. Optionally, the storage medium may alternatively be integrated into the processor. The processor and the storage medium may be disposed in the ASIC.

The computer program instructions may alternatively be loaded onto the computer or another programmable data processing device, so that a series of operations and steps are performed on the computer or the another programmable device to generate computer-implemented processing, and instructions executed on the computer or the another programmable device provide steps for implementing a function specified in one or more procedures in a flowchart and/or one or more blocks in a block diagram.

Although this application is described with reference to specific features and the embodiments thereof, it is clear that various modifications and combinations may be made to them without departing from the spirit and scope of this application. Correspondingly, this specification and the accompanying drawings are merely example descriptions of this application defined by the appended claims, and are considered to have covered any of or all modifications, variations, combinations or equivalents within the scope of this application. It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A slice isolation method, comprising:
obtaining, by a first network device, information about a first slice of user equipment; and
obtaining, by the first network device, a second key if the information about the first slice does not match information about a second slice that the user equipment requests to access, wherein the second key is for performing security protection on the information about the second slice and/or information in a process in which the user equipment accesses the second slice.

2. The method according to claim 1, wherein the information about the first slice comprises an attribute of the first slice, and the information about the second slice comprises an attribute of the second slice; and
the obtaining, by the first network device, a second key if the information about the first slice does not match information about a second slice that the user equipment requests to access comprises:
obtaining, by the first network device, the second key if the attribute of the first slice does not match the attribute of the second slice.

3. The method according to claim 1 or 2, wherein the obtaining, by the first network device, a second key comprises:
generating, by the first network device, the second key based on a first key, wherein the first key is for performing security protection on the information about the first slice and/or information that is in a process in which the user equipment accesses the first slice.

4. The method according to claim 3, wherein the generating, by the first network device, the second key based on a first key comprises:
generating, by the first network device, the second key based on the first key if an isolation requirement of the first slice is higher than an isolation requirement of the second slice.

5. The method according to claim 1 or 2, wherein the obtaining, by the first network device, a second key comprises:
performing, by the first network device, re-authentication on the user equipment; and
generating, by the first network device, the second key if the re-authentication performed by the first network device on the user equipment succeeds.

6. The method according to claim 5, wherein the performing, by the first network device, re-authentication on the user equipment comprises:
performing, by the first network device, network re-authentication on the user equipment if an isolation requirement of the first slice is lower than an isolation requirement of the second slice.

7. The method according to any one of claims 2 to 6, wherein that the attribute of the first slice does not match the attribute of the second slice comprises:
the attribute of the first slice or the attribute of the second slice does not allow simultaneous use with a slice of any other attribute;
the attribute of the first slice allows simultaneous use with only a slice that has a same slice/service type SST, wherein an SST of the attribute of the second slice is different from an SST of the attribute of the first slice;
the attribute of the second slice allows simultaneous use with only a slice that has a same slice/service type SST, wherein an SST of the attribute of the first slice is different from an SST of the attribute of the second slice;
the attribute of the first slice allows simultaneous use with only a slice that has a same slice differentiator SD, wherein an SD of the attribute of the second slice is different from an SD of the attribute of the first slice; or
the attribute of the second slice allows simultaneous use with only a slice that has a same slice differentiator SD, wherein an SD of the attribute of the first slice is different from an SD of the attribute of the second slice.

8. The method according to any one of claims 2 to 7, further comprising:
sending, by the first network device, a registration accept message to the user equipment if the attribute of the first slice matches the attribute of the second slice.

9. The method according to claim 8, wherein that the attribute of the first slice matches the attribute of the second slice comprises:
the attribute of the first slice or the attribute of the second slice allows simultaneous use with a slice of any other attribute;
the attribute of the first slice allows simultaneous use with only a slice that has a same SST, wherein an SST of the attribute of the second slice is the same as an SST of the attribute of the first slice;
the attribute of the second slice allows simultaneous use with only a slice that has a same SST, wherein an SST of the attribute of the first slice is the same as an SST of the attribute of the first slice;
the attribute of the first slice allows simultaneous use with only a slice that has a same SD, wherein an SD of the attribute of the second slice is the same as an SD of the attribute of the first slice;
the attribute of the second slice allows simultaneous use with only a slice that has a same SD, wherein an SD of the attribute of the first slice is the same as an SD of the attribute of the second slice; or
the second slice and the first slice are mapped to same single network slice selection assistance information S-NSSAI.

10. A slice isolation method, comprising:
sending, by user equipment, a first request message to a first network device, wherein the first request message is for requesting to access a second slice;
receiving, by the user equipment, a first indication message from the first network device, wherein the first indication message indicates the user equipment to obtain a second key; and
obtaining, by the user equipment, the second key, wherein the second key is for performing security protection on information about the second slice and/or information that is in a process in which the user equipment accesses the second slice.

11. The method according to claim 10, wherein the obtaining, by the user equipment, the second key comprises:
obtaining, by the user equipment, a first key, wherein the first key is for performing security protection on information about a first slice and/or information that is in a process in which the user equipment accesses the first slice; and
generating, by the user equipment, the second key based on the first key.

12. The method according to claim 10, wherein the obtaining, by the user equipment, the second key comprises:
performing, by the user equipment, re-authentication with the first network device; and
generating, by the user equipment, the second key if the re-authentication performed by the user equipment with the first network device succeeds.

13. The method according to any one of claims 10 to 12, further comprising:
receiving, by the user equipment, a registration accept message from the first network device.

14. A communication apparatus, comprising a transceiver unit and a processing unit, wherein
the transceiver unit is configured to obtain information about a first slice of user equipment; and
the processing unit is configured to obtain a second key if the information about the first slice does not match information about a second slice that the user equipment requests to access, wherein the second key is for performing security protection on the information about the second slice and/or information that is in a process in which the user equipment accesses the second slice.

15. The apparatus according to claim 14, wherein the information about the first slice comprises an attribute of the first slice, and the information about the second slice comprises an attribute of the second slice; and
when a first network device obtains the second key if the information about the first slice does not match the information about the second slice that the user equipment requests to access, the processing unit is specifically configured to obtain the second key if the attribute of the first slice does not match the attribute of the second slice.

16. The apparatus according to claim 14 or 15, wherein when obtaining the second key, the processing unit is specifically configured to generate the second key based on a first key, wherein the first key is for performing security protection on the information about the first slice and/or information that is in a process in which the user equipment accesses the first slice.

17. The apparatus according to claim 16, wherein when generating the second key based on the first key, the processing unit is specifically configured to generate the second key based on the first key if an isolation requirement of the first slice is higher than an isolation requirement of the second slice.

18. The apparatus according to claim 14 or 15, wherein when obtaining the second key, the processing unit is specifically configured to: perform re-authentication on the user equipment; and generate the second key if the re-authentication performed on the user equipment succeeds.

19. The apparatus according to claim 18, wherein when performing re-authentication on the user equipment, the processing unit is specifically configured to perform network re-authentication on the user equipment if an isolation requirement of the first slice is lower than an isolation requirement of the second slice.

20. The apparatus according to any one of claims 15 to 19, wherein that the attribute of the first slice does not match the attribute of the second slice comprises:
the attribute of the first slice or the attribute of the second slice does not allow simultaneous use with a slice of any other attribute;
the attribute of the first slice allows simultaneous use with only a slice that has a same slice/service type SST, wherein an SST of the attribute of the second slice is different from an SST of the attribute of the first slice;
the attribute of the second slice allows simultaneous use with only a slice that has a same slice/service type SST, wherein an SST of the attribute of the first slice is different from an SST of the attribute of the second slice;
the attribute of the first slice allows simultaneous use with only a slice that has a same slice differentiator SD, wherein an SD of the attribute of the second slice is different from an SD of the attribute of the first slice; or
the attribute of the second slice allows simultaneous use with only a slice that has a same slice differentiator SD, wherein an SD of the attribute of the first slice is different from an SD of the attribute of the second slice.

21. The apparatus according to any one of claims 15 to 20, wherein the transceiver unit is further configured to send a registration accept message to the user equipment if the attribute of the first slice matches the attribute of the second slice.

22. The apparatus according to claim 21, wherein that the attribute of the first slice matches the attribute of the second slice comprises:
the attribute of the first slice or the attribute of the second slice allows simultaneous use with a slice of any other attribute;
the attribute of the first slice allows simultaneous use with only a slice that has a same SST, wherein an SST of the attribute of the second slice is the same as an SST of the attribute of the first slice;
the attribute of the second slice allows simultaneous use with only a slice that has a same SST, wherein an SST of the attribute of the first slice is the same as an SST of the attribute of the first slice;
the attribute of the first slice allows simultaneous use with only a slice that has a same SD, wherein an SD of the attribute of the second slice is the same as an SD of the attribute of the first slice;
the attribute of the second slice allows simultaneous use with only a slice that has a same SD, wherein an SD of the attribute of the first slice is the same as an SD of the attribute of the second slice; or
the second slice and the first slice are mapped to same single network slice selection assistance information S-NSSAI.

23. A communication apparatus, comprising a transceiver unit and a processing unit, wherein
the transceiver unit is configured to: send a first request message to a first network device, wherein the first request message is for requesting to access a second slice; and receive a first indication message from the first network device, wherein the first indication message indicates user equipment to obtain a second key; and
the processing unit is configured to obtain the second key, wherein the second key is for performing security protection on information about the second slice and/or information that is in a process in which the user equipment accesses the second slice.

24. The apparatus according to claim 23, wherein when obtaining the second key, the processing unit is specifically configured to: obtain a first key, wherein the first key is for performing security protection on information about a first slice; and generate the second key based on the first key.

25. The apparatus according to claim 23, wherein when obtaining the second key, the processing unit is specifically configured to perform re-authentication with the first network device; and the user equipment generates the second key if the re-authentication performed with the first network device succeeds.

26. The apparatus according to any one of claims 23 to 25, wherein the transceiver unit is further configured to receive a registration accept message from the first network device.

27. A computer-readable storage medium, comprising a program or instructions, wherein when the program or the instructions are run on a computer, the method according to any one of claims 1 to 9 or the method according to any one of claims 10 to 13 is performed.

28. A communication system, wherein the communication system comprises a first network device that performs the method according to any one of claims 1 to 9, and user equipment that performs the method according to any one of claims 10 to 13.
